# EUROPEAN PATENT APPLICATION

(11) **EP 1 016 989 A2**
(43) Date of publication of application: **05.07.2000**
(21) Application number: 99309204.8
(22) Date of filing: 18.11.1999
(51) Int. Cl.: G06F 17/30

(54) **Extensible distributed enterprise application integration system and methods of operating same**

(30) Priority: 18.11.1998 US 108993 P; 05.10.1999 US 412595; 05.10.1999 US 412633
(71) Applicant: Saga Systems, Inc., Reston, VA 20191 (US)
(72) Inventor: Yee, Hon-Siew, Herndon VA 20171 (US); Gordon, Gary Alan, McLean, VA 22102 (US); Taylor, John Timothy, Leesburg VA 20176 (US)
(74) Representative: Haley, Stephen

(57) **Abstract**

A system for integrating a plurality of computer applications has an enterprise messaging system, said enterprise messaging system passing messages between said computer applications. A database storage system coupled to said enterprise messaging system stores a plurality of data transformation configurations and a plurality of rules. An integration services is coupled to said enterprise messaging system, and comprises a data transformation engine using the data transformation configurations stored in said database storage system and a rules evaluation engine using the rules stored in said database storage system. A plurality of agent-adapters are coupled to said enterprise messaging system, each coupled to a respective one of said computer applications, each agent-adapter passing messages between said enterprise messaging system and said respective computer application. A message schema operates in conjunction with said agent-adapters to parse individual message elements from the computer applications.

## Description

The present invention is related generally to what has become known in the computing arts as "middleware", and more particularly to an extensible distributed system and methods of operating same to integrate applications of the type that are normally deployed across a networked enterprise.

According to one observer, if the lifeblood of today's corporations is information, then their arteries are the "inter-application interfaces" that facilitate movement of data around the corporate enterprise. This has more recently become known as an "application network".

For the typical organization, the application network has grown organically into a collection of ad hoc application integration programs. This menagerie has had a very serious impact on businesses as it increases the time for implementing new applications, prevents senior management from getting a clear picture of the business and, in short, clogs the corporate arteries. In spite of the fact that application integration has become crucial to a competitive corporation's survival, it has nevertheless been acceptable in the prior art to handcraft or "hack" custom code for such purposes at enormous long-term cost to the corporation. Long-term application integration decisions have, likewise, been made at the lowest possible levels based solely on individual project criteria. Because of the decidedly difficult nature of these problems, an effective enterprise application integration (EAI) solution has yet to be found.

The advent of the Internet, client/server computing, corporate mergers and acquisitions, globalization and business process re-engineering, have together forced corporate information technology (IT) departments to continually seek out new, and often manual, ways to make different systems talk to each other ― regardless of how old some of those systems may be. In the ensuing chaos, inadequate communications systems have had a debilitating effect on IT's abilities to move as fast as the business needs it to.

Recent trends in IT have only exacerbated this problem by increasing ― often by an order of magnitude ― the amount of inter-application interfacing needed to support them. Most recently, enterprise applications have performed such functions as data warehousing and enterprise resource planning (ERP), and facilitated electronic commerce. A brief review of these three technologies would, therefore, be helpful in understanding the long-felt but as yet unresolved need for EAI.

Data warehousing techniques require large volumes of clean historical data that must be moved, on a regular basis, from many operational systems into the warehouse. Source data is usually structured for online transactional processing (OLTP), while the typical data warehouse also accommodates online analytical processing (OLAP) formats. Therefore, the source data must undergo extensive aggregation and reformatting as it is transferred to the warehouse.

A typical data warehouse according to the prior art is populated in four steps: (a) extracting the source data; (b) cleaning such extracted data; (c) aggregating the cleaned, extracted data in a number of dimensions; and (d) loading the warehouse. Each warehouse source requires the building of a specific data extraction, cleansing, aggregation, and load routine. Forester Research estimates that the average large company has approximately four data warehouses. In two years, it is expected that this number will grow to six. The average amount of data contained in each warehouse is also expected to double in size in that same period ― from about 130 gigabytes to about 260 gigabytes.

The problems associated with such large amounts of data growing at an ever-increasing pace is exacerbated by the quality of source data. According to a study conducted by the META Group, typical data warehouses are being loaded today with as much as 20% poor quality data. That same study indicates that about 70% of its respondents used extraction, cleansing and loading processes that were coded by hand. With respect to the required aggregation processes, anecdotal evidence also reveals that as much as 50 hours of computer time may be required to complete this function alone. It is readily apparent that significant maintenance efforts would be involved with programs coded in such a manner.

On the other hand, typical ERP systems (such as the R/3 enterprise application developed by SAP AG of Walldorf, Germany, as well as those developed by PeopleSoft, Oracle, and Baan) are essentially large, integrated packaged applications that support core business functions, such as payroll, manufacturing, general ledger, and human resources. Large corporations find it particularly attractive to buy such software solutions from a single source, since it can cost between 10 to 20 times more to develop the same functionality in-house than to purchase it. Implementing an ERP system, however, can be an overwhelming process for a number of reasons.

First and foremost, the corporation is buying a product and not building a solution. This means that business units within the corporation must adapt to the product and how it works, not the other way around. Furthermore, today's ERP systems cannot replace all of a corporation's custom solutions. They must, therefore, communicate effectively with other legacy systems in place. Finally, it is not atypical for a corporation to employ more than one and completely different ERP system because a single vendor cannot usually meet every organizational need.

As a result, the options for getting data into and out of an ERP system preclude known approaches used for data warehousing. Each ERP system has a proprietary data model that is constantly being enhanced by its vendor. Writing extract or load routines that manipulate such models is not only complicated, but is also discouraged by the vendor since data validation and business rules inherent in the enterprise application are likely to be bypassed. Instead, ERPs require interaction at the business object level which deals with specific business entities such as general ledgers, budgets or accounts payable. Further details regarding implementation and use of one well-known and widely accepted ERP system may be found in Special Edition Using SAP R/3 (2d ed.), ISBN: 0-7897-1351-9, by Que Corporation (1997).

Electronic commerce in one form or another has been around for many years. In essence, it got its start with electronic data interchange (EDI). EDI permitted companies to communicate their purchase orders and invoices electronically, and continued to develop such that today's companies use EDI for supply chain management. However, not until the more recent exploding use of online Internet websites to buy, sell, and even auction, items of interest has there been such a dire need for robust, effective EAI. See, *e.g.,* U.S. Patent No. 5,627,972.

Applications get developed in order to accomplish a specific business objective in a measured time frame. In a typical large organization, different teams of people using a wide assortment of operating systems, DBMSs and development tools develop hundreds of applications. In each case, the specific requirements are satisfied without regard for integration with any other applications.

Several powerful trends are driving the market for application integration. For example, significant developments in peer-to-peer networking and distributed processing have made it possible for businesses to better integrate their own functional departments as well as integrate with their partners and suppliers. The aforementioned Internet/"intranet"/"extranet" explosion is also fueling the demand for a new class of "human active" applications that require integration with back-end legacy applications. Tremendous growth around the world in the adoption of enterprise application software packages (*e.g..* SAP R/3) also requires integration with back-end legacy applications. Finally, message oriented middleware (MOM) ― products such as IBM's MQSeries message queuing product ― are becoming increasingly popular. Once customers realize the benefits of simple one-to-one application connectivity with MOM, their interest in many-to-many application integration increases significantly.

As the need for businesses to integrate grows, the number of IT dollars spent on integrating applications is increasing rapidly. According to various industry analysts, the need for "mission critical" application integration will drive the combined market for MOM and "message brokers" to grow from $300 million in 1997 to over $700 million in 1999. According to an IBM survey of larger customers, nearly 70% of all code written today consists of interfaces, protocols and other procedures to establish linkages among various systems. Savvy IT executives can clearly see the dollar savings to be gained by acquiring off-the-shelf software to satisfy as much of this requirement as possible.

A message broker is a software hub that records and manages the contracts between publishers (*i.e.,* senders) and subscribers (*i.e.,* receivers) of messages. When a business event takes place, the application will publish the message(s) corresponding to that business event. The broker reviews its lists of subscriptions and activates delivery to each subscriber for that message type. Subscribers receive only the data to which they subscribe. A message published by one application can be subscribed to by multiple consumer applications. Similarly, a subscribing application can receive messages from multiple publishing applications.

Before applications can publish or subscribe to messages, they must register their interest with the broker. There are two basic and different methods for applications to register interest in a message type ― subject-based addressing and message-content filtering. In subject-based addressing, the broker uses the subject to identify and route the message to all parties expressing interest in that subject. The subject is a word used to describe the contents of the message. For example, a subject of the name "hr. emp. new," could serve to distribute information (*e.g.,* name, address, employee number, etc.) on a newly hired employee. In message content routing, on the other hand, subscriptions are made based on the contents of fields within the message. The subscriptions can be based upon the message type and/or specific selection criteria relative to a field within the message. For example, a loan approval application could subscribe to all purchase orders over $100,000.

One advantage to having two publish/subscribe paradigms is that the need to address messages to individual subscribing applications is avoided. Additionally, new subscribing applications can be added without any changes to the publishing application.

The typical publishing/subscribing broker uses a robust delivery vehicle for the actual distribution of messages between applications. As mission critical messages travel over a combination of external and internal networks, the systems software ensures that messages are never lost or duplicated in the event of network failures. More often than not, an asynchronous message delivery capability is provided which uses store-and-forward message queuing. In this paradigm, the queue-to-queue transfer takes place in pseudo-real time when the subscribing application is available. If the subscribing application is unavailable, the message is stored in a persistent queue for later delivery.

To be effective, the message delivery vehicle must include a business transaction coordination function. A business transaction is typically made up of several units of work. Each and every unit of work must complete in order for the transaction to occur. If even one unit of work fails, the whole transaction fails, and all completed units of work must then be reversed. These transactions are long running and require message-based updates to multiple databases. The business transaction coordination function provides this managerial support.

Two other important components are the rules-based engine and the data-transformation component. The business rules engine allows organizations to process messages based upon the unique requirements of their business. Typically, business rules engines provide a visual front end to avoid the need for programming in a procedural language. With this flexible approach, changes in business processes can be easily reflected in a modified rules configuration.

The data transformation component is used to develop application-specific adapters. These adapters convert the data formats and applications semantics from the sending application to the receiving application. There are many conversion requirements. They range from basic data transformation to resolving the incompatibilities that exist between the structure (*i.e.,* syntax), meaning (*i.e.,* semantics) and timing of the information that must be shared.

There are two main strategies for application adapters according to the prior art. One strategy is to convert all of the source data and synchronize (or "sync") applications to a standard canonical form. Messages move from the source adapter to the sync adapter in this standard form. At the sync adapter, the messages are convened to the format of the sync application.

The second strategy for application adapters is to automatically convert the format and semantics from the sending application to the receiving application in one step, without any intermediate formats. In this approach, only one adapter is required for two applications to communicate with each other and it can be integrated with either of the applications.

The rules based engine and the data transformation component work together to reconcile the differences between applications. For example, before two applications can be integrated around an order, the business rules regarding the processing of orders must be defined within each system. Within Application "A," an order might be comprised of a collection of data from multiple files and databases: whereas within Application "B," an order might exist as an individual message nested within a larger file of business transactions. The difficult challenge is to resolve the incompatibilities between the structure of the data and the underlying content of an order as defined in each application.

There are a number of potential business benefits that message brokering provide. First of all is their ease of application integration. With message brokers, the integration of new applications with existing legacy or third-party applications can be performed in a shorter period of time. The integration can take place without any need for understanding the internal structure and design of each application. By focusing on the interface as messages, existing applications can be integrated with minimal disruption.

Support for electronic commerce is a second benefit that message brokering provides. As businesses begin to automate the supply chain of their vendors and partners, there is a need for their independent applications to communicate in a loosely coupled manner. This is precisely the essence and strength of message brokering. The message broker is completely congruent with the business need.

Last, but certainly not least, is message brokering's support for continued heterogeneity. As new technology has evolved, new architectures have been developed and heterogeneity is increasing over time. A methodology such as message brokering is designed to accommodate today's heterogeneous world and will be useful in the future. New, differing applications can be added over time as either publishers or subscribers, without any changes to the existing applications in the message broker.

In summary, message brokers have the potential to provide a least-common-denominator approach to integrating heterogeneous applications within an enterprise. Users can choose the best technology for each individual application whether Java® (a registered trademark of Sun Microsystems. Inc., Mountain View, California U.S.A.), Active X® (a registered trademark of Microsoft Corporation, Redmond, Washington U.S.A.), or CORBA® (a registered trademark of Object Management Group, Inc., Framingham. Massachusetts U.S.A.), without concern for how that application will integrate with other applications in the enterprise. Message brokers thereby bridge the gap between applications of the future and the disparate and complex products and technologies that currently exist in today's application catalogues.

While there are many benefits to adopting a message broker strategy, it must be kept in mind that there are also potential pitfalls. The very strengths of the message brokering in terms of its loose coupling flexibility, may also be its greatest weakness. The nature of message broker software, as noted above, is very generalized. Because it is designed to handle so many different conditions, testing all possible end-to-end code paths is an insurmountable task. When undetected bugs exist in the software, messages may be lost, delivered twice or delayed. The damage from such "accidents" would be most keenly felt in enterprises where message brokers are used to integrate mission critical transaction processing applications. In financial transactions, for example, the delivery of one single message could be worth millions of dollars, while at the same time its non-delivery or delayed delivery could result in the loss of millions.

A second risk to a message broker implementation is the possibility that foreign applications will introduce unauthorized messages to the broker. This may also result in loss. For example, in the banking industry, counterfeit messages could be published and thereby cause the withdrawal or misappropriation of funds.

A third risk of message broker implementation is the classical, "single point of failure." Message brokers of the prior an are typically implemented in a "hub and spoke" architecture. This means that the majority of message traffic passes through a few central hubs. In the event of an outage or a physical disaster to one of those hubs, the mission critical operations of a business could come to a grinding halt.

Another problem with distributed hubs is the difficulty of managing the message broker complex. Because a message broker integrates so many different business applications into a few consolidated hubs, the talent and expertise required to manage and administer a message broker complex may be unattainable.

The potential risk exposure is large whenever technology is applied to mission critical transaction processing applications of an enterprise. One problem for message brokering is that it manipulates mission critical information. In relative terms, message brokering is fairly new. However, while some early adopter companies have had great success with the concept of message brokering, much more is needed before message brokers and EAI can enter the mainstream.

In the 1980's software systems development concentrated on the ability of heterogeneous systems to communicate with each other. This was, in large part, due to the proliferation of proprietary communication protocols. Any newly developed system had to either comply with the application and data formats in place for the systems with which it wished to connect or communicate, or provide such application a specific translation. Accordingly, all software was customized to a greater or lesser degree.

In today's rapidly changing environment, the concerted efforts of thousands of developers worldwide are focused on developing a system that satisfies the need for disparate applications to communicate with each other, without the necessity of embedding multiple, customized application-specific translation schemes. This as yet unfulfilled need is grounded in the imperative of the global economy.

Accordingly, it is a general object of the present invention to provide systems and methods for integrating enterprise applications, which at the same time provide comprehensive management of such enterprise applications, including centralized monitoring, operation and configuration.

It is a more specific object of the present invention to provide an agent-adapter architecture and message schema, which together improves message tracking and manipulation in such systems and methods.

Another object of the present invention is to provide in such systems and methods enhanced security features, including such aspects as authentication, authorization, privacy, non-repudiation, and auditing.

Still another object of the present invention is to provide systems and method for integrating enterprise applications that include means for disaster recovery, fail-safe rollover, message replay and dual-site logging.

It is also an overall object of the present invention to facilitate fast and simple integration of leading ERP applications, custom/legacy applications, packaged applications, and databases. More specifically, it is also an object of the present invention to reduce or substantially eliminate the need for the expensive custom coding that is traditionally required to integrate applications.

Another object of the present invention is to provide an EAI system, which has a distributed architecture that facilitates the long-term reliability, scalability, flexibility, and extensibility needed by today's enterprises.

Still another object of the present invention is to provide an EAI system, which increases an enterprise's return on investment by enabling the enterprise to leverage its existing IT investments, increase its speed to market, implement solutions and realize benefits more quickly, and reduce its operational costs.

Yet another object of the present invention is to provide an EAI system, which provides faster access to an enterprise's customer and billing information so that the enterprise can service its customers more effectively and efficiently, creating stronger, more effective relationships.

A further object of the present invention is to provide an EAI system with many-to-many points of integration, which substantially eliminates the concerns of conventional hub-and-spoke systems and their single-point-of-failure risks.

Still a further object of the present invention is to provide an EAI system, which simplifies an enterprise IT architecture by providing a central point of integration for virtually all applications and platforms.

Yet a further object of the present invention is to provide an EAI system, which provides efficient and cost effective information sharing.

The methods, apparatus, and articles of manufacture described herein will achieve the above and other objects, advantages, and novel features according to the present invention, while avoiding the problems described herein above.

In accordance with one important aspect of the present invention, the method comprises computer-implemented means for passing messages between a first computer application and a second computer application. Such method generally includes the steps of: (a) providing a first message having a first data structure from the first computer application: (b) publishing the first message to obtain a first published message: (c) converting the first data structure of the first published message to a second data structure to obtain a second message; (d) publishing the second message to obtain a second published message; and (e) providing the second published message to the second computer application.

According to another important aspect of the present invention, the apparatus comprises a system for integrating a plurality of computer applications. Such apparatus generally includes means for routing messages within the system; means for storing a plurality of data transformation configurations and a plurality of rules; means for applying the data transformation configurations to messages; means for applying the rules to messages; and means for routing messages between the means for routing messages within the system and the computer applications and having dedicated means for routing messages for respective computer applications.

Alternatively, the apparatus of the present invention comprises a system for integrating a plurality of computer applications. Such system generally includes an enterprise messaging system that passes messages between the computer applications; a database storage system, coupled to the enterprise messaging system, that stores a plurality of data transformation configurations and a plurality of rules; an integration service, also coupled to the enterprise messaging system and comprising a data transformation engine using the data transformation configurations stored in the database storage system and a rules evaluation engine using the rules stored in the database storage system; and a plurality of agent-adapters, further coupled to the enterprise messaging system with each agent-adapter coupled to a respective one of the computer applications to pass messages between the enterprise messaging system and the respective computer application.

In accordance with still another important aspect of the present invention, the article of manufacture comprises a computer-readable medium embodying code segments for integrating a plurality of computer applications. Non-limiting examples of such "computer-readable medium" in this regard include any; magnetic hard disk; floppy disk; optical disk, (*e.g.,* a CD-ROM, a CD-R, a CD-RW, or any disk compliant with known DVD standards); magneto-optical disk; magnetic tape; memory chip; carrier wave used to carry computer-readable electronic data, such as are used in transmitting and receiving e-mail or in accessing a network, including the Internet, intranets, extranets, virtual private networks (VPN), local area networks (LAN), and wide area networks (WAN); or any other storage device used for storing data accessible by a computer. Non-limiting examples of such "code segments" include not only source code segments and object code segments, but also computer programs in any language, instructions, objects, software, or any means for controlling a computer. Such code segments generally include: (a) a first code segment for passing messages between the computer applications; (b) a second code segment for performing data transformation of messages; (c) a third code segment for applying rules to messages; and (d) a plurality of fourth code segments, each of which passes messages between respective computer applications and the first code segment.

In accordance with yet another important aspect of the present invention, the systems and methods are directed to a computer. Non-limiting examples of a "computer" include any: general purpose computer; mainframe; PC; web browser; e-mail client; e-mail server; network file or messaging server; Internet appliance; wireless telephone; pager; personal digital assistant (PDA); fax machine; digital still or video camera; digital voice or video recorder; digital copier or scanner; interactive television; hybrid combination of any of the above computing means and an interactive television; or any other apparatus comprising a processor, memory, the capability to receive input, and the capability to generate output.

Other novel and equally important aspects of the present invention will become more apparent from a detailed description thereof, when considered in conjunction with the following drawings wherein:
Fig. 1(a) depicts an enterprise application integration (EAI) system according to the present invention, as it is incorporated within an environment including legacy systems, packaged software applications, and relational database management systems;
Fig. 1(b) illustrates a first scenario in which the system that is shown in Fig. 1(a) is used to integrate an enterprise resource planning (ERP) packaged software application with custom legacy systems:
Fig. 1(c) illustrates a second scenario in which the system that is shown in Fig. 1(a) is used to integrate two or more disparate ERP packaged software applications;
Fig. 1(d) illustrates a third scenario in which the system that is shown in Fig. 1(a) is used to integrate one or more front-office packaged software applications with one or more back-office packaged software applications;
Fig. 1(e) illustrates a fourth scenario in which the system that is shown in Fig. 1(a) is used to integrate data warehouse software applications using two or more disparate relational database management systems (RDBMS) or multi-dimensional database management systems;
Fig. 2 is a block diagram of the EAI system that is shown in Figs. 1(a) through 1(e);
Fig. 3 depicts an adapter development kit used in the system that is shown in Fig. 2;
Fig. 4(a) illustrates a basic agent-adapter architecture that is useful in accordance with a first embodiment of the present invention:
Fig. 4(b) illustrates an extensible agent-adapter architecture that is useful in accordance with a second embodiment of the present invention;
Fig. 4(c) is a block diagram illustrating a presently preferred embodiment of an agent-adapter according to the invention;
Figs. 5(a) through 5 (c) illustrate design and integration objects used in the system according to the present ;
Fig. 6 illustrates a message schema used in the system according to the present invention;
Fig. 7 shows a other objects according to the present invention;
Fig. 8 illustrate a typical transformation process used in accordance with the present invention; and
Fig. 9 further illustrates the transformation process shown in Fig. 9;
Figs. 10(a) and 10(b) illustrate the advantage of message hubs according to the present invention;

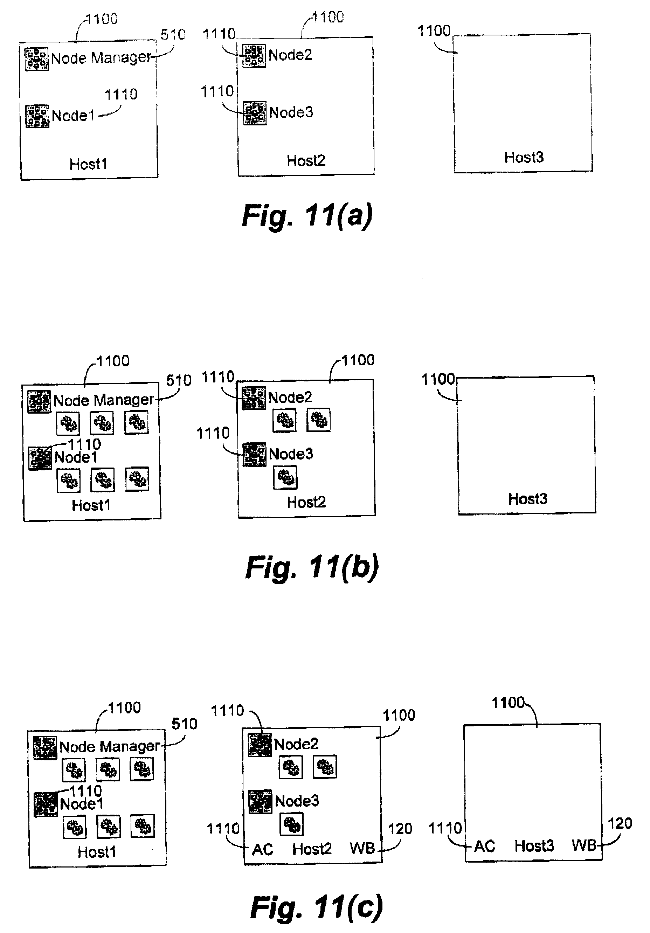

Figs. 11(a) through 11(c) depict various operating environments in which nodes and services according to the present invention are managed;
Fig. 12 is a block diagram illustrating system services according to the present invention;
Fig. 13 is a flowchart illustrating the steps necessary to create a message in accordance with the present invention without converting raw data;
Fig. 14 is flowchart illustrating the steps necessary to create a message in accordance with the present invention by converting raw data;
Fig. 15(a) illustrates one method of creating a message from an application to a message instance in accordance with a first embodiment of the present invention;
Fig. 15(b) illustrates one method of creating a message from an application to a message instance in accordance with a second embodiment of the present invention;
Fig. 15(c) illustrates one method of creating a message from an application to a message instance in accordance with a third embodiment of the present invention;;
Fig. 15(d) illustrates one method of creating a message from an application to a message instance in accordance with a fourth embodiment of the present invention;
Fig. 16 is a first class diagram according to the present invention; and
Fig. 17 is a second class diagram according to the present invention.

### The Enterprise Computing Runtime Environment

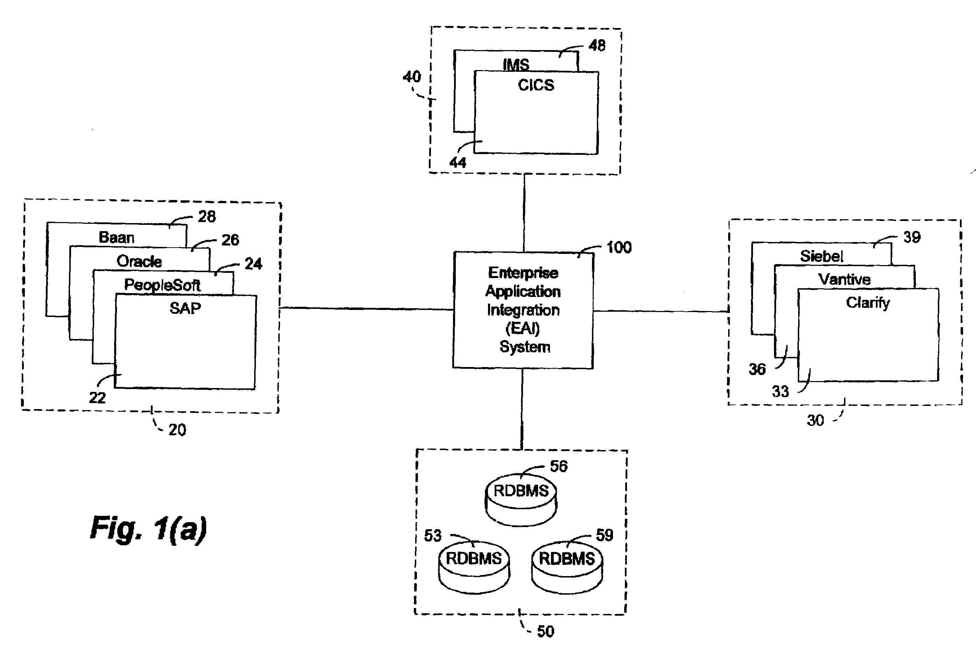

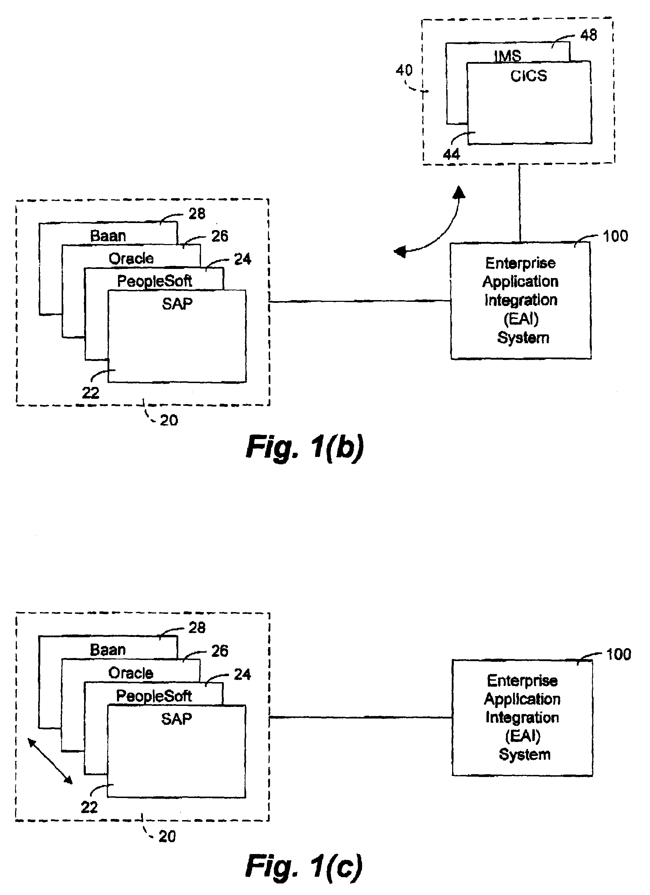

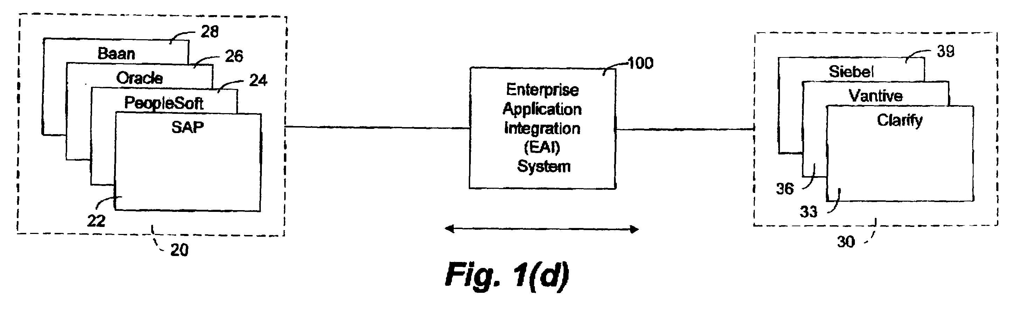

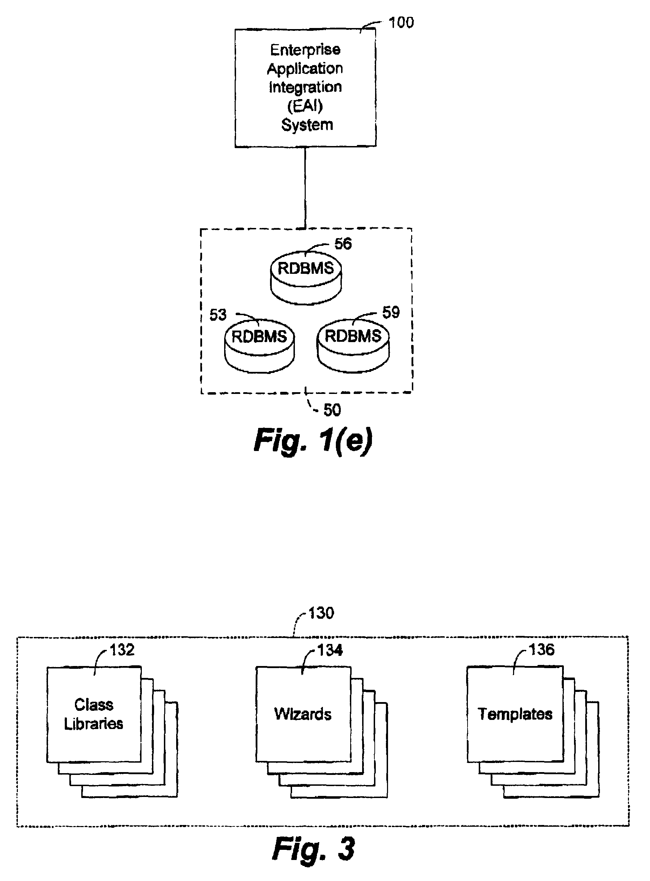

Referring now to the drawings, wherein like reference characters or numerals designate like or corresponding parts throughout each of the several views, there is shown in Fig. 1(a) a simplistic view of an enterprise computing runtime environment 10. Typical runtime environments 10 use a plurality of packaged software applications, including "back-office" applications 20 for enterprise resource planning (ERP) and "front-office" applications 30 for customer relationship management (CRM), one or more customized legacy systems 40, and one or more multi-dimensional/relational database management systems (RDBMS) 50.

Throughout the past few decades, business enterprises have designed or bought many large, single-purpose software applications. These "legacy" applications continue to be used, and most often were designed to perform a specific function (*e.g.,* inventory, finance, accounting, sales force automation, and human resources). More recently, substantial investments have also been made by those same enterprises to procure packaged software applications from software developers such as SAP, PeopleSoft, Oracle, and Baan. Each of these packaged software applications enjoyed its own unique strengths. Accordingly, the typical business enterprise used two or more disparate packaged software applications in the same runtime environment. Such packaged software applications were not, in the beginning, designed to share information among themselves. As a result, enterprises had been forced to integrate their disparate packaged software applications with expensive custom code. Such integration efforts often took months, if not years, to complete.

Enterprise application integration (EAI) systems, such as the system 100 shown in Fig. 1(a), therefore, became a necessity. However, unlike EAI systems according to the prior art, system 100 comprises a solutions-oriented middleware, which facilitates its users to modify and fully integrate information residing within disparate applications through a single, common infrastructure. It allows the user to move information seamlessly, transparently, and quickly among employees, customers, and suppliers, to achieve maximum productivity.

In such a manner, system 100 provides a reliable store-and-forward messaging system, a capable message brokering facility, and a strong agent-adapter architecture for integrating disparate enterprise applications. It is adapted to be distributed, and is designed for easy administration and management. It is targeted to meet the complete, heterogeneous computing requirements of a large organization. It intelligently links various applications so they can access and share information. It is middleware that adapts to applications, rather than forcing applications to adapt to it.

System 100 solves most EAI problems by enabling its users to link ERP applications 20, packaged applications 30, custom and legacy applications 40, and databases 50 throughout the enterprise, with minimal custom coding. When fully integrated, an enterprise can quickly synchronize global businesses and divisions and respond to ever changing market demands. With faster access to customer and billing information, the user's organization can service customers more effectively and efficiently, creating stronger, more effective relationships. System 100 is a business-centric enterprise integration solution, with an integration flow design environment that targets the business analyst. The analyst defines the problem in business terms, and the product handles the technical issues.

For example, as shown in Fig. 1(b), the common scenario of enterprise resource planning (ERP) integration with custom legacy systems demands that the organization encapsulate complex processes properly within standard ERP implementations ― not an easy thing to do. Many corporations choose to implement packaged applications for standard business processes such as inventory and order management. But packaged applications are seldom used for vertical processes. For these purposes, the system 100 is ideal. It provides object interfaces for the ERP systems 22, 24, 26, 28, as well as wrapper-generation technology for linking to legacy systems 44, 48.

The extension of the global supply chain also requires that middleware bridge two or more disparate ERP systems 22, 24, 26, 28. As illustrated in Fig. 1(c), it can be readily appreciated that nothing may be more important to a business-to-business collaboration. The system 100, thus, plays a key role by enabling inter-ERP transactions in which business events in one system (*e.g.,* SAP system 22) invoke corresponding events in another system (*e.g.,* Baan system 28) without exposing the details of the underlying technology.

Integration of a corporation's "front-office" with its "back-office" is an important function, which allows front-office applications that interact with the customer to collaborate with back-end production applications. For example, and referring now to Fig. 1(d), it is critically important that customer-support systems collaborate with ERP inventory modules. System 100, thus, facilitates integration of best-of-breed front-office and back-office applications seamlessly and transparently.

In the data warehouse scenario as shown in Fig. 1(e), data from disparate systems must migrate to a central data warehouse or repository. Moving real-time information from several ERP systems (not shown in Fig. 1(e)) to a central relational or multi-dimensional database containing a plurality of different databases 53, 56, 59 is exemplary of this problem. However, data warehouse developers can leverage the data translation services of system 100, as is described in greater detail herein below, for real-time data aggregation or other operations. Data is, thereby translated into an understandable and meaningful condition.

### Definitions

As used hereinafter, the following terms should be construed by those of ordinary skill in the art in accordance with their ordinary and accustomed meaning. To the extent the definitions, which appear herein below, differ from otherwise conventional definitions known to those of ordinary skill in the art, it should be appreciated that such terms are hereinafter clearly set forth in such a manner to put one reasonably skilled in the art on notice that the applicant intended to so redefine that claim term.

An "accessor" is a function specified in message definitions that the system 100 uses to access data. Accessors identify the start and end of application data fields and system message elements, and remove or insert markers.

"Adapter implementations" are code designed for a specific application that can extract data and produce system messages; receive system messages and update data; or extract data in response to requests. When the user creates an adapter to use in an integration flow, the user builds it around an adapter implementation. System adapter implementations provide basic exception handling and can handle any message definition. A user creates custom adapter implementations using an ADK as defined and described in greater detail herein below.

"Adapters" are integration flow objects that interact with enterprise applications to extract data or insert, update, or delete data.

The "administration console" is a graphical user interface (GUI) through which a system administrator configures and manages the nodes and services of system 100.

"Agent services" provide system services to the adapters. An agent service is required on each host that runs an adapter.

A "classpath" is an environmental variable that tells the Java virtual machine where to find the class libraries, including user-defined class libraries.

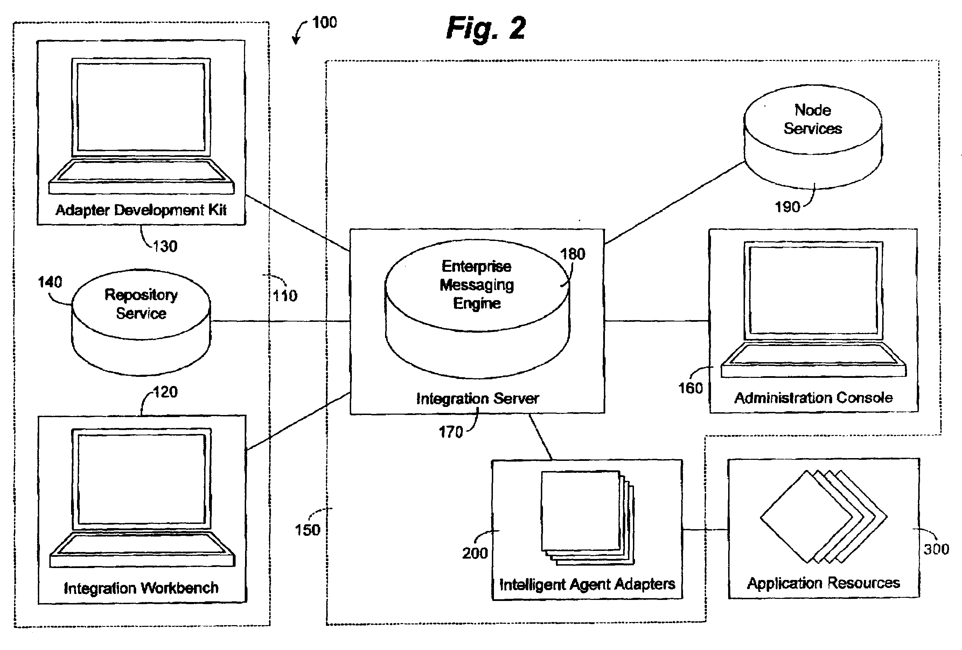

"Clients" are processes that remotely access computer server resources, such as compute power and large memory capacity. Typical system clients are the integration workbench 120 and the administration console 160 (Fig. 2).

A "connection" is an object that specifies startup or connection parameters for adapters. For example, an RDBMS connection specifies the JDBC driver, the URL of the database, the user name, and password.

"Convert" data is a process in which converters specified in message definitions convert an application's native data types to the Java data types the system 100 supports, and vice versa.

A "converter" is a function specified in message definitions that system 100 uses to convert data. In such a manner, converters convert native data types to the Java data types that the system 100 supports, and vice versa.

"Custom adapter implementations" are code designed for a specific application that can: either extract data and produce system messages; receive system messages and update data; or extract data in response to requests. Custom adapter implementations, created using the ADK, can connect to applications the system 100 does not currently support.

A "definition object" is an integration flow object that provides instructions for a process that the system is to implement.

"Delimiters" are tokens or markers that separate data fields in data from enterprise applications.

A "durable subscription" is a property of the system's message hubs that ensures the hub target objects receive all messages intended for them. If a target object becomes inactive, the system remembers those messages, which the target has received. When the target next becomes active, the system delivers messages the target has not yet received.

"Enterprise applications" are applications from which adapters extract data or to which adapters propagate data (*e.g.,* SAP R/3 or MQSeries).

An "Enterprise Messaging Service (EMS)" according to this invention is implemented using the Java Messaging Service (JMS). It enables system 100 to use multiple messaging modes, and supports message hubs and provides message persistence.

"Enterprise Resource Planning (ERP)" applications provide a turnkey solution (*e.g.,* warehouse management, human resource management, and materials management) for common business problems. Examples of ERP products are SAP R/3, PeopleSoft, and Baan.

An "EntireX Broker (ETB)" is a cross-platform, message-oriented middleware according to this invention, which links mainframe, Windows NT, and UNIX applications and components. Internet and intranet clients, and ActiveX- and Java-enabled workstations.

"Filter definitions" are definition objects that specify criteria for screening messages out of integration flows.

A "functions host" is a computing platform, such as a Windows NT server or workstation, or OS/390 mainframe.

"Hubs" are integration flow objects that receive messages from source objects and hold the messages until the system 100 delivers them to specified target objects. Hubs allow adapters and transformers to exchange messages asynchronously. They are also useful for concentrating message flows; multiple objects that produce the same kind of message can all send those messages to one message hub, which simplifies links among objects

An "IDoc Extractor" reads flat files produced by the SAP R/3 transaction WE63 to create implementation configurations and message definitions and stores them in the system's repository service.

"Implementation settings" are runtime parameters for adapters (*e.g.,* a polling interval).

An "integration flow" is a series of linked system objects that move data from one or more enterprise applications to other enterprise applications.

"Integration objects" are integration flow objects, which send messages, receive messages, or both. *See. e.g.,* adapters, hubs, and transformers.

An "integration workbench" is a graphical user interface (GUI) through which a user designs integration flows.

"Intermediate documents (IDocs)" is an SAP R/3 data format used by R/3 to exchange data with other R/3 systems and with other applications.

An "item message element" is a message element that contains data. Items are the lowest level message elements in the hierarchy of the message definition. They cannot contain other message elements.

"Java Database Connectivity (JDBC)" is the Java API standard for SQL-based database access.

A "Java Development Kit (JDK)" is a software development environment for writing applications in the Java programming language.

"Java Message Service (JMS)" is a Java API specified by Sun Microsystems for messaging.

A "Java Naming and Directory Interface (JNDI)" is a set of APIs that assist with the interfacing to multiple naming and directory services.

"Java Runtime Environment (JRE)" is a subset of the Java Development Kit used to redistribute the runtime environment consisting of the Java virtual machine, Java core classes, and supporting files.

A "Java virtual machine (JVM)" is part of the Java Runtime Environment responsible for interpreting bytecodes.

"Link markers" are tokens or delimiters that separate data fields in data from enterprise applications.

A "message definition category" is a logical grouping for message definitions.

"Message definitions" are definition objects, which identify data system 100 is to extract from or propagate to an enterprise application. Message definitions also define how system 100 is to construct system messages from enterprise application data or create enterprise application data from system messages.

A "message element" is a data object that makes up the message schema of a message definition. Message elements are arranged in a hierarchical structure, and can be sections, tables, or items.

"Message-Oriented Middleware (MOM)" is software that uses messages to enable applications on the same or different platforms to communicate. Communications protocols are hidden from the applications. Examples of MOMs are MQSeries, EntireX Broker, and JMS.

"Message persistence" relates to the storing of messages onto recoverable media. The system writes each message it delivers from one integration object to another to stable storage in a location the user specifies. If a system failure occurs while a message is in transit, system 100 can retrieve the message from storage when the system 100 is restored and deliver the message to its targets.

A "message schema" is that part of message definitions, which define how to structure a message. Message schemas can include section, table, and item message elements arranged in a hierarchical structure.

"Monitor services" store system runtime data, including system logs and statistics information.

A "node" is a physical process (or Java virtual machine) that supports one or more system and application services.

"Node hosts" are software than enables the user to configure and run nodes on a machine. The user must install a node host on every machine, other than the node manager, that will host a node.

A "node manager" is an interface through which nodes are managed. The interface allows the user to configure, start, pause, or stop a service. Node managers start and stop nodes as well. The node manager maintains the state of all of the services that are distributed to the nodes. In addition, the node manager maintains status information (*e.g.,* current state or activity level) of a node or service.

"Point-to-point messaging" is a messaging style for hubs in which the system delivers each message that arrives at the hub to a single hub target only (*i.e.,* the first available target.

A "primary input message" is the main input data to the system transformation processes specified in transformer definitions. The system takes input data, transforms it, and creates output data needed by target applications.

"Publish/subscribe messaging" is a messaging style for hubs in which the system delivers each message that arrives at the hub to all hub targets.

A "replier" is a system object, such as a reply adapter, which provides data when transformers request it during the data transformation process.

"Reply adapters" are integration objects that reply to requests for data from other integration objects by extracting the data from applications and sending it to the requesting objects. Requesters send system messages containing data in key message elements, and the reply adapters insert data into related message elements and send the system messages back.

A "repository service" is interfaced via Java Native Directory Interface, and stores configurations for all configured services and integration flow objects.

"Routing services" enable the system to direct messages through the system based on a message's content, including filtering message content according to criteria the user define. The routing service supports filters.

A "system message" is a message, in platform-neutral format, that the system uses to move data from application to application.

"Section message elements" are non-repeating groups of message elements that do not contain actual data. They contain other message elements that contain data (*i.e.,* they contain items). Sections can contain any combination of message element types.

A "service" is a process that provides product functionality. The system is made up of system, messaging, integration, and agent services.

"Source adapters" are integration objects that extract data from enterprise applications, construct system messages from the data, and send the messages to other the system integration objects.

A "source object" is an integration flow objects that provides messages to other objects. See. *e.g.,* source adapters, transformers, and hubs.

"Supporting input messages" are optional input data to the system transformation processes, as specified in transformer definitions. Transformation processes use supporting input message data to supplement primary input message data. The system takes input data, transforms it, and creates output data needed by target applications.

A "table message element" is a group of section message elements, called rows, that can repeat any number of times. Table elements do not contain actual data. Instead, they contain other message elements that contain data (*i.e.,* they contain items). Tables can contain any combination of message element types.

"Target adapters" are integration objects that receive system messages from other integration objects, create application data from the system messages, and propagate the data to target applications.

A "target integration object" is an integration flow object that receives messages from other objects. *See. e.g.,* target adapters, transformers, and hubs.

"Transaction Processing Monitor (TPM)" is a software system designed to optimize use of computing resources, such as storage and applications, for many users.

To "transform data" is a process in which transformers modify data taken from one or more enterprise applications into data needed by other enterprise applications.

"Transformation services" enable the system to transform messages, including splitting messages, combining messages, and manipulating message data. The transformation dervice supports transformers.

A "transformation step" is a command that makes up the transformation process. Each step either reads input message data, transforms and maps input message data to output message definitions, or writes transformed data to output messages.

"Transformer definitions" are definition objects that define how the system is to transform system messages extracted from one or more enterprise applications into system messages needed by other enterprise applications.

A "transformer" is an integration object that implements transformer definitions. Transformers gather input messages from source integration objects, transform the content and format of the message data, and produce and send output messages to target integration objects.

"User interface services (UIS)" provide the user interface facilities necessary to run the client components (*i.e.,* the integration workbench 120 and the administration console 160).

Referring now to Fig. 2, system 100 generally comprises a plurality of design components 110 and a plurality of runtime management components 150. The design components 110, in turn, more specifically comprise an integration workbench 120, an adapter development kit (ADK) 130, and a repository service 140. The runtime management components 150, in turn, more specifically comprise an administration console 160, an integration server 170, including an enterprise messaging engine 180, a node services component 190, a plurality of intelligent agent-adapters 200.

The integration workbench 120 generally comprises a graphical modeling and configuration tool for integration project development. It is used to define events, those messages associated with such events, integration flows, and business rules associated with such integration flows, as well as to identify those agents that publish and subscribe to the defined events. In addition, the integration workbench 120 provides diagnostics for consistency checking and testing integration flows.

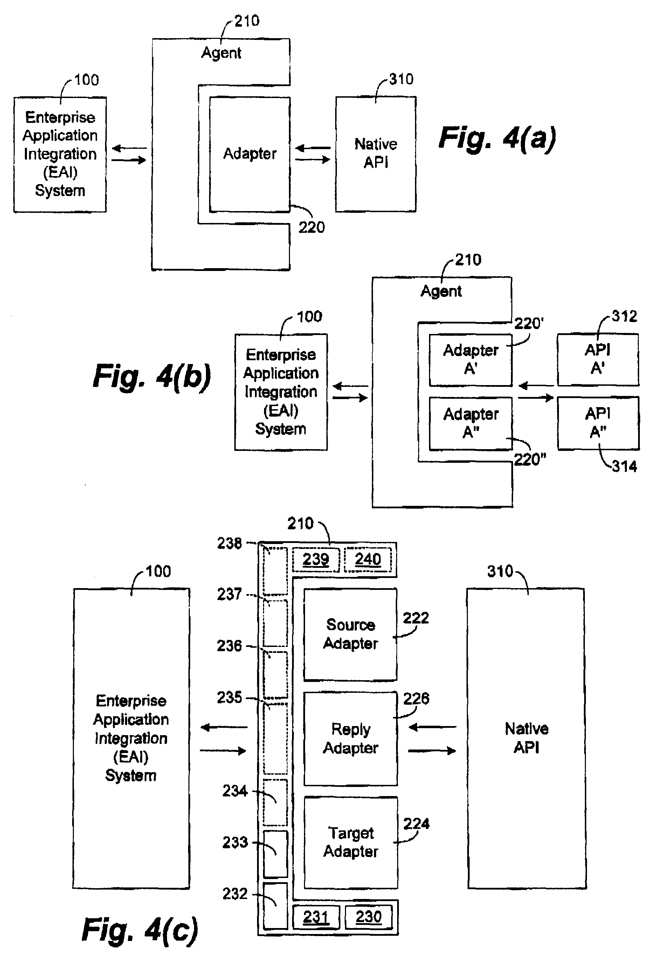

The ADK 130 is used to configure and generate customized intelligent agent-adapters 200. Shown in greater detail in Fig. 3. ADK 130 generally comprises an object framework including class libraries 132, wizards 134, and templates 136. The ADK 130 generates objects that can be accessed from conventional development tools. While system 100 includes a plurality of standard intelligent agent-adapters 200 for a wide range of applications and resources, there may be specific applications for which there is no such standard intelligent agent-adapter 200. In that event, ADK 130 further permits a custom, intelligent agent-adapter 200 to be built by those developers who are more familiar with the published interfaces that are provided by the target application environment.

The repository service 140 generally comprises a relational database, which contains all of the specifications for system 100, meta-data, and message broker service rules, and an interface to that relational database.

The administration console 160 is used to configure and manage the runtime environment of system 100, and generally comprises a graphical console. It serves as a control point for system configuration, maintenance, monitoring, and diagnostics. Through the administration console 160, each of the individual components of system 100 are managed, including comprehensive services such component initiation and termination, and built-in software distribution.

The integration server 170 implements intelligent messaging by triggering and executing integration flows to process events. It executes static and dynamic context sensitive rules that evaluate, modify, and route event data. As noted herein above, integration server 170 includes the enterprise messaging engine 180 comprising a distributed messaging subsystem, which manages all event data. It is, on the one hand, a key component of system 100. On the other hand, it is largely transparent to any user of system 100, and generally operates behind the scenes. It supports full persistence, once-and-only-once message delivery, and an in-memory mode for non-critical, high volume message requirements.

The node services component 190 manages start/restart recovery, exception handling, and dynamic configuration of system 100. It provides facilities for automated system installation and remote management across all participating clients and servers. Moreover, it is readily capable of installing and updating components remotely.

As noted herein above, the plurality of intelligent agent-adapters 200 include not only those standard intelligent agent-adapters 200 that are distributed with system 100, but also those custom intelligent agent-adapters 200 that are developed by ADK 130. Each such intelligent agent-adapter 200, regardless of its type, generally comprises a runtime interface module connecting a particular one of the external application resources 300 to system 100.

Referring for the moment to Figs. 4(a) and 4(b), it may be appreciated that such intelligent agent-adapters 200, in accordance with a particularly important aspect of the present invention, combine the functionality of autonomous agents with adapter technology. The agent component 210 acts as an independent software process, which hosts one or more adapter components 220 (Fig. 4(a)), or 222 and 224 (Fig. 4(b)). It encapsulates sophisticated functionality such as store and forward caching, filtering, resource pooling, and scheduling.

A primary advantage of this agent-adapter architecture is its ability to host complex business logic in order to maintain state and negotiate transactions with the application resources 300. This ability may be thought of as "conversational mode processing", which is particularly critical when integrating application resources 300 of a transactional nature. More often than not, data elements that may be required for brokering messages from such application resources 300 are deeply nested within sub-transactions. These deeply nested data elements can, thus, be obtained only by engaging in a conversation with the transactional application resource 300. Otherwise "primitive" adapters, which have been used in the past, do not adequately address the complex behavior of transactional application resources 300.

As shown in Fig. 4(a), a typical intelligent agent-adapter 200 according to the present invention includes an agent component 210 and an adapter component 220. On one side of this architecture, the agent 210 conforms to a specified event and messaging model of the system 100. Adapter 220, on the other side of this agent-adapter architecture, uses a native application programming interface (API) 510 of a particular application resource 300, or other suitably published interface mechanism. Together, agent 210 and adapter 220 mediate differences in interface protocols and data structures to provide a uniform, normalized view of the business events that they publish and consume.

Unlike past approaches to EAI, the foregoing agent-adapter architecture is extensible. It not only facilitates an ability to seamlessly accommodate changes to existing APIs, but it also continues to enable the use of those existing APIs with legacy systems. Shown more clearly in Fig. 4(b), this extensible agent-adapter architecture generally comprises an agent 210 encapsulating a first adapter A'222 and a second adapter A''224.

Adapter A'222, for example, corresponds to an application resource 300 having a basic set of APIs A'. On the other hand, adapter A''224 corresponds to the same application resource 300 having a newer set of APIs A''. Users of such an extensible agent-adapter architecture may thereby choose to simultaneously adapt to both interfaces A' and A''. For example, the basic set of APIs A' may correspond to a production environment, while the newer set of APIs A'' may correspond to a pre-production environment of a newer version of a particular application resource 300. The newer set of APIs A'' could, thus, be tested "live" within system 100, at the same time that the basic set of APIs A' will be used to maintain previously tested and proven functionality. In such a manner, this extensible agent-adapter architecture enables perfectly seamless negotiation of incremental changes to the application resource 300 into the integration environment.

Referring now to Fig. 4(c), there is shown a greatly enlarged view of an agent-adapter 200 according to a presently preferred embodiment of the invention. Like the agent-adapters shown in Figs. 4(a) and 4(b), the agent-adapter 200 shown in Fig. 4(c) is used to communicate between the system 100 and the native API 510 of an enterprise application (not shown). The agent-adapter 200 according to this embodiment, however, includes three adapters 222, 224, and 226. As described in greater detail herein below, adapter 222 is of the source adapter variety, adapter 224 is of the target adapter variety, and adapter 226 is of the reply adapter variety. It may be readily appreciated to one of ordinary skill in the art, therefore, that the agent-adapter 200 according to this embodiment of the present invention is not limited to any given number of specifically-directed adapters which may be encapsulated by agent 210. For example, a request adapter 228 (not shown in Fig. 4(c)) of the type described in greater detail herein below may be used in conjunction with or in substitution for those adapters 222, 224, or 226 as shown.

Moreover, according to another particularly important aspect of the present invention, agent 210 comprises a plurality of objects 230-240 useful in extending the abilities of agent-adapter 200. For example, object 230 presently comprises a transformation object, which facilitates performance of otherwise centralized functions of system 100 locally within the agent-adapter 200 itself. Object 231 similarly comprises an error management object, object 232 a connection management object, and object 234 a rules management object. Further extensiblity of agent-adapter 200 is only limited by the number of additional objects 235-240 that may be co-located with the agent 210.

The foregoing is a particularly important aspect of the present invention, since it facilitates decentralization of the message handling aspects of system 100. Distributed enterprise application integration is, therefore, assured, since the agent-adapter 200 according to this embodiment of the present invention may be associated with any node across the system 100.

The manner in which system 100 shares data among enterprise applications is determined by integration flows, as will described in greater detail herein below. Typical integration flows use one or more system messages. Each of the system messages generally comprises a communication, in a platform-neutral format, which moves selected data from one software application to another software application. Integration flows, in turn, are made up of a plurality of objects and links among those objects. Each of the objects performs a specific task relating to the system messages that carry data from enterprise application to enterprise application.

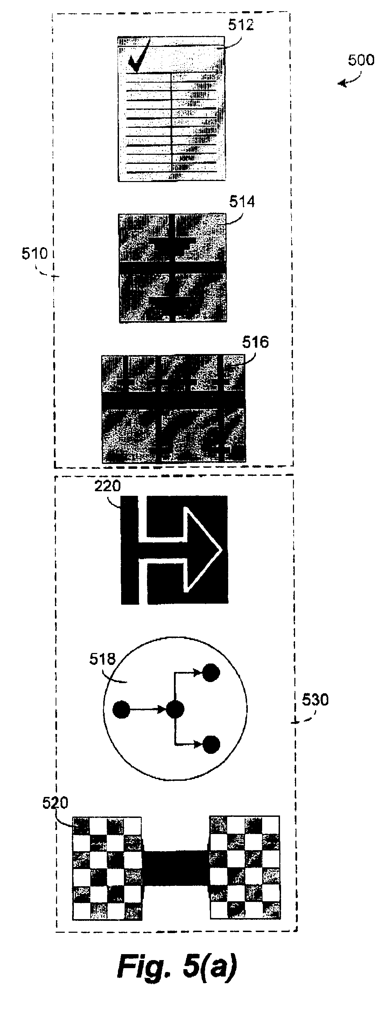

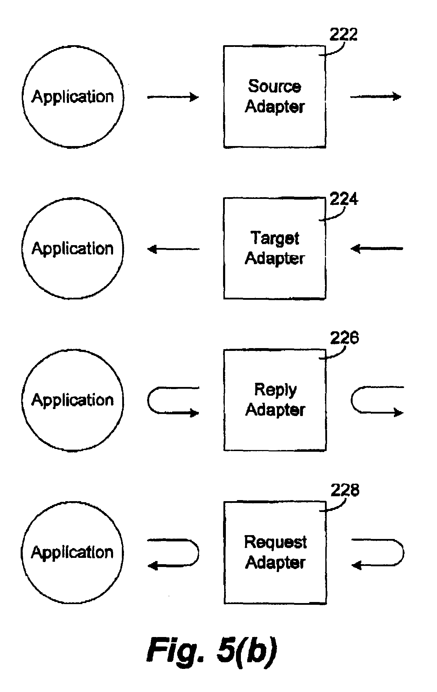

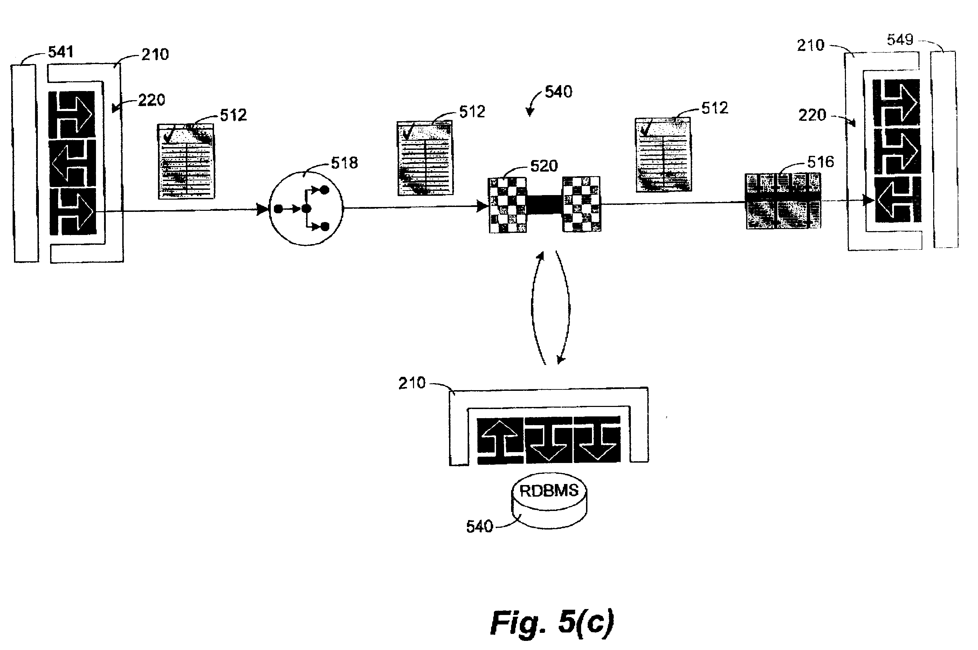

For example, and referring now to Figs. 5(a) through 5(c), an object in an integration flow 540 comprises either a definition object 510 or an integration object 530. There are three basic types of definition objects 510, which may be used according to the present invention: (1) a message definition 512; (2) a transformer definition 514; and (3) a filter definition 516. Definition objects 510 may be used repeatedly in any given integration flow 540. For example, the same message definition 512 must be assigned to all objects 510, 530 that will handle system messages produced using that message definition 512. Moreover, the same filter definition 516 may be used in multiple sections of an integration flow 540.

The message definition object 512 identifies data that the system 100 is to extract from or propagate 10 an enterprise application 541, 549. It also defines how the system 100 not only will construct system messages from enterprise application data, but also create enterprise application data from system messages.

Transformer definition objects 514 define how the system 100 will transform system messages extracted from one or more enterprise applications into system messages needed by other enterprise applications.

A filter definition object 516 defines criteria that the system 100 will use to filter unwanted system messages out of integration flows. In an integration flow that transforms new customer data into invoices, for example, one filter definition object 516 that might be useful would be one in which system messages about customers who have already paid would be filtered out.

Integration objects 530, of which there are three basic types, actually send or receive system messages. The three basic types of integration objects 530 are: (1) an adapter 220; (2) a message hub 518; and (3) a transformer 520. Furthermore, and as noted briefly herein above, there are four basic types of adapters 220; (a) source adapters 222; (b) target adapters 224; (c) reply adapters 226; and (d) request adapters 228.

A source adapter 222 extracts the data from a source enterprise application, constructs system messages from that data, and sends those system messages to other integration objects 530 (*e.g.,* message hub 518). A target adapter receives system messages from other integration objects 530 (*e.g.,* transformer 520 through filter definition object 516), creates application data from those system messages, and propagates that data to a target enterprise application. A reply adapter 226 replies to requests for data from some other integration objects 530 by extracting the data from the applications, and then sending it to the requesting object 530.

In general, message hubs 518 are used to receive system messages from one or more source integration objects 530, and to hold those system messages until the system 100 can deliver same to one or more target integration objects 530.

Transformers 520 are generally used to implement transformer definitions in three steps. They first gather system messages from source integration objects 530 (*e.g.,* message hub 518). After the gathering step, they next transform the content and format of the data contained within such system messages. They finally produce and send output system messages to target integration objects 530 (*e.g.,* target adapter 224).

Message definitions 512 are the primary objects around which the integration flow 540 according to the present invention is built. When a user creates an integration flow, a message definition is assigned to every object 510, 530 in that flow. A message definition 512 not only identifies the kind of system message that the object 510, 530 is to handle, but it also defines the hierarchical structure or schema of that system message.

For example, a message definition 512 must be assigned to every source adapter 222 in the user's integration flow 540. Each source adapter 222 knows what kind of message it is to produce, based on the message definition 512 the user has assigned to it. Adapters 220, hubs 518, and filters 516 handle just one message definition 512. Transformer definitions 514 and transformers 520, on the other hand, are capable of handling multiple message definitions 512, as inputs and outputs.

Some applications can create the Java data types that the system 100 supports. In those cases, the source adapter 222 can extract the data types specified in its message definition 512 and store them directly in a system message. Likewise, a target adapter 224 can retrieve the data types from a system message and insert them directly into the application (*e.g.,* a target enterprise application 549). Other applications use a well-defined message format to describe the layout of their native data. In those cases, the message definition 512 for a source adapter 222 must include instructions for creating Java data types from the application data. Similarly, the message definition 512 for a target adapter 224 must include instructions for creating application data from the system Java objects.

A special kind of message definition 512 is used by integration objects 530 to request data from other the system objects 510, 530. For example, message definitions 512 can also specify message validation criteria. System 100 uses this criteria to determine whether system messages produced by adapters 220 and transformers 520 contain valid data (*e.g.,* where the user includes a message definition 512 defining messages, which contains employee payroll information). The user, accordingly, may prevent inaccurate salary data from entering the system 100. If the message definition 512 contains an item element "Salary", for example, the user could then define validation criteria for the item stating that the message is valid only when the value in "Salary" is a positive number. The user may organize related message definitions 512 into logical groups called message categories. Suppose, for example, that the user is integrating three applications using the system 100. The user might group the messages in the user's project into three message categories, one for each application.

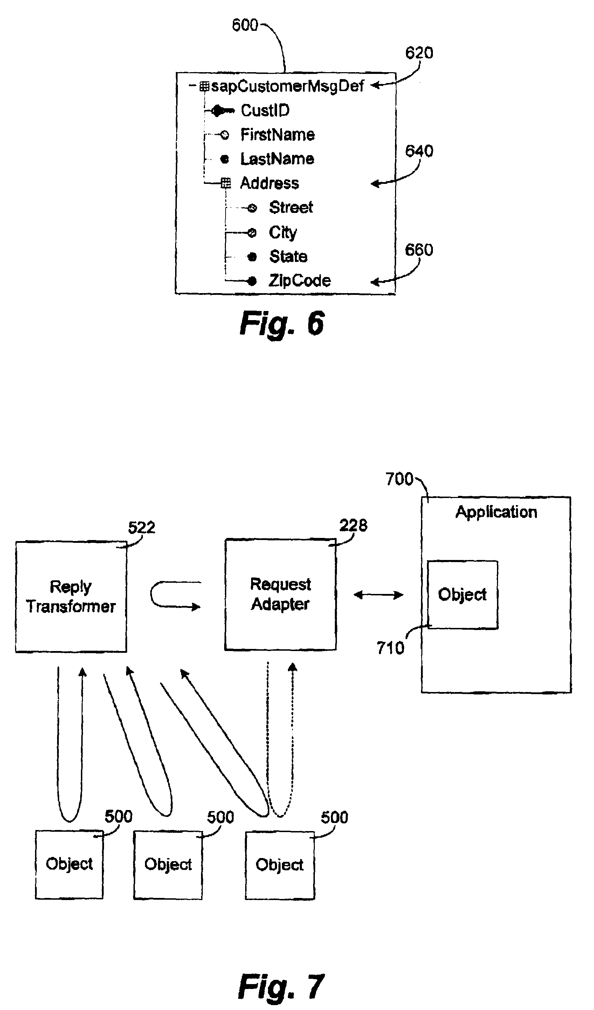

It should be noted at this juncture that the particular message schema 600 of a message definition 512 is made up of data objects, called message elements, which are arranged in a hierarchical structure as shown in Fig. 6. In general, a message schema 600 comprises one or more sections 620, one or more tables 640, and one or more items 660. Either a section 620 or a table 640 must appear at the top of message 600 hierarchy.

A section 620 is a non-repealing group of message elements. Such section elements do not themselves contain actual data. Instead, they contain other message elements that contain data (*i.e.,* they contain items 660). Sections 620 can contain any combination of message element types.

A table 640 is a group of section elements, called rows that can repeal any number of times. Table elements also do not contain actual data. They contain other message elements that contain data (*i.e.,* they contain items). Tables 640 can contain any combination of message element types.

An item 660 is a message element that contains data. Items 660 are the lowest level message elements in the hierarchy of the message definition. They cannot contain other message elements.

Each message definition 512 can contain criteria for validating messages based on that definition. That is, when the user defines a message definition, the user can specify criteria that data in individual message elements must meet for a message to be considered valid within the system 100.

The user can specify validation criteria for all levels of a message. That is, the user can specify criteria for message items within sections or within tables. The entire message either passes the validation criteria and continues through the flow, or does not pass and is discarded. If even one row of a table does not pass specified criteria, the entire message does not pass. The system 100 validates every message produced by an adapter 220 or transformer 520 using the validation criteria in the appropriate message definition.

Adapters 220 connect with enterprise applications to extract or propagate data. Each adapter 220 produces, receives, or replies to messages using the message definition 512 the user assign to it. The system 100 provides standard adapters 220 for the applications it will integrate. Each standard adapter 220, as noted above, is a source adapter 222, a target adapter 224, a reply adapter 226, or a request adapter 228, and is designed for a specific agent service type. For example, for EntireX Broker, the system offers an ETB Standard Source Adapter and an ETB Standard Target Adapter. Standard adapters are generic. They provide basic exception handling and can handle any message definition. If a standard adapter 220 does not include all code the user need to interact with an application (*e.g.,* the user want to specify more detailed exception handling), the user can create a custom adapter 220 using the ADK 130. The user can also use the ADK 130 to create custom adapters 220 for applications not currently supported by the system 100. Likewise, the user can use the ADK 130 to create custom adapters 220 that connect to any application with a JAVA application programming interface (API).

To use a standard or custom adapter 220 in an integration flow 540, the user must configure in to handle a specific message definition 512. The user can configure as many of each type of adapter 220 as necessary to handle all messages the user need to include in integration flows 540.

Source adapters 222 extract data from enterprise applications and produce messages that they send to other integration objects 530. Specifically, a source adapter 222: (1) polls for or is notified by its application of a particular type of event that has occurred at the application (*e.g.,* data on a new customer has been entered); (2) extracts the data relating to the event from the application; (3) using message definition instructions, constructs a system message from the data; and (4) produces a message and sends it to one or more target integration objects 530.

Target adapters 224 receive messages from other the system objects 510, 530 in integration flows 540 and propagate the message data to enterprise applications 541, 549. Specifically, a target adapter 224: (1) receives system messages from one or more source integration objects 530; (2) using instructions from the message definition 512, creates application data from the system message; and (3) propagates the data to the target application 549 by inserting new data, updating data, or deleting data as appropriate.

Reply adapters 226 extract data from enterprise applications 541, 549 when requested by integration objects 530 such as transformers 520. Specifically, a reply adapter 226: (1) receives a request message from an integration object 530; (2) extracts the requested data from its enterprise application 541, 549; and (3) sends the data to the transformer 520 in a reply message based on the same message definition 512 as the request message.

Request adapters 228, in conjunction with reply transformers 522, are used to extract data from enterprise applications 541, 549 without specific requests from such applications. As shown in Fig. 7, they retrieve information that they anticipate may be needed by an application object 710 making another request. For example, the request from application object 710 may be as simple as "I want to see customer shipping data." All data comprising such customer shipping data is pulled in anticipation, put in the same message definition of the request, and "pushed" to the application object 710. Specifically, a request adapter 228: (1) receives a request message from an application object 710; (2) extracts the anticipated data either directly from another object 540 in the system 100, or with the assistance of a reply transformer 522, through the reply transformer 522; and (3) sends the data to the application object 710 in a message based on the same message definition 512 as the request message.

Adapters 220 are hosted by agent services as described in greater detail herein below. Agent services provide information adapters 220 need to connect to their applications (*e.g.,* passwords and user IDs). The system 100 offers agent services for every enterprise application it can integrate. That is, it offers an SAP R/3 agent service, an EntireX Broker agent service, and so on. The system 100 also offers agent services for custom adapters the user create using the ADK 130.

The user needs one agent service for each enterprise application the user wants to integrate using the system 100. For example, if the user wants to integrate three SAP R/3 systems with one RDBMS, the user needs three SAP R/3 agent services and one RDBMS agent service. Each agent service hosts all adapters 220 for the enterprise application to which the agent connects.

Transformer definitions 514 define a process that transforms messages containing data extracted from one or more applications into messages containing data needed by one or more applications. Transformers 520 implement transformer definitions 514 by gathering input messages from source objects, transforming the data, and sending output messages to target objects.

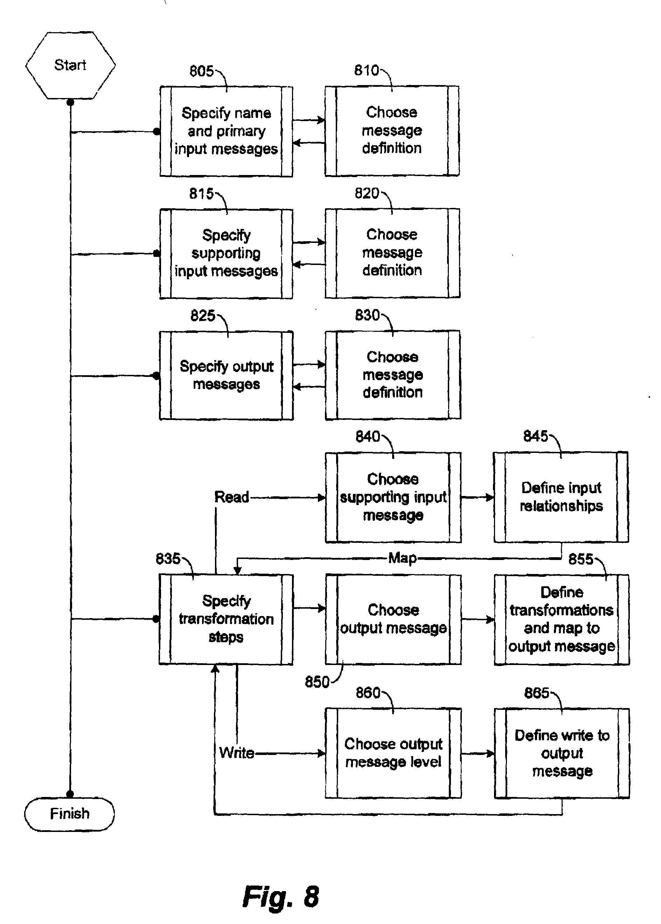

The transformation process defined in a transformer definition 514 always involves at least two kinds of messages: the primary input message, and one or more output messages, as shown in Fig. 8. The primary input message typically contains most or all of the data the user want to send in output messages to the target applications. Output messages contain data from the input messages, transformed as necessary for target applications.

When the user creates a transformer definition 514, the user first specifies at 805 the name of the primary input message. Then, at 810, the user identifies the message definition 512 that defines the messages the user wants to use as the primary input. Any supporting input messages are then specified at 815. Next, the user identifies at 820 the message definitions 512 that define such supporting input messages. A single transformation process can produce any number of outputs. Accordingly, the user must specify those output messages at 825, and identify the message definitions 512 that define the messages the user want to produce as outputs.

The user then creates, beginning at 835, a sequence of steps 840, 845, 850, 855, 860, 865 that define when to read input data, how to transform the input data, how to map the input data from input message definitions to output message definitions, and when to write the transformed data to actual output messages.

The user transforms input data in any way necessary to create the output messages the user needs. For example, the user may create a transformation expression that specifies concatenating a message item containing a customer's first name and a message item containing the customer's last name, because a target application requires the customer's full name in one data field. The user creates a transformation expression that specifies selecting only certain characters from a message item, or padding a message item with spaces to make it the right length for the corresponding data field in the target application. The user then produces different output messages by writing them at different points in the transformation process.

When the primary input message does not contain all data needed to produce the output messages, the user can obtain supporting input for the transformation process using request/reply message definitions. For example, suppose the primary input message the user is using in the transformer definition uses abbreviations for United States state names (*e.g.,* VA for Virginia).

Assume, for example, that the target application requires full state names. To obtain the full state names needed to produce the output messages, the user would use a request/reply message definition that can send the abbreviations to an application and receive the state names in return.

After the user has created a transformer definition 514, the user can test it to make sure it produces the proper output messages before using it in an integration flow. The user can then assign the transformer definition to one or more transformers 520.

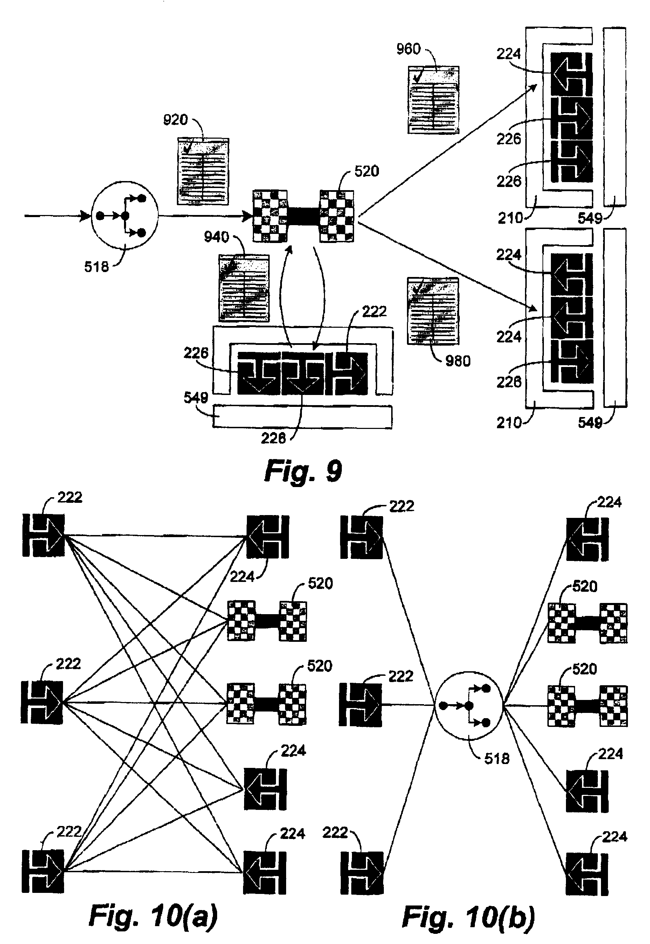

A transformer 520 implements a transformer definition 514. When the user creates a transformer 520, the user specify objects 510, 530 to use as sources of the primary input message and the objects 510, 530 that are to be targets for the output messages. The user also specifies the objects that are to reply to requests for supporting inputs. When the transformer 520 receives a primary input message from a source object 540, it runs the sequence of steps defined in the transformer definition 514 that make up the transformation process. It then reads the primary and supporting input messages, transforms the input data, writes the transformed data to one or more output messages, and sends the output messages to the target objects 540. A typical transformation process is shown in Fig. 9. The transformer 520 receives a primary input message 920 from a hub 518. It then obtains a supporting input message 940 from a reply adapter 226. Finally, the transformer 520 sends two different output messages 960, 980 to two different target adapters 224.

Hubs 518 are message holding areas for adapters 220 and transformers 520. Hubs 518 allow adapters 220 and transformers 520 to exchange messages asynchronously, and simplify links among objects. For example, the user may have a source adapter 222 that produces messages to a transformer 520. The user may want the adapter 222 to produce and send its messages regardless of whether the transformer 520 is ready to receive them. The user could set up the adapter 222 to send its messages to a message hub 518, and set up the transformer 520 to receive the adapter's messages from that hub 518. The system 100 then delivers messages from the hub 518 to a target object 540 when the target is ready to receive them.

Furthermore, the user may have three source adapters 222 sending messages based on the same message definition 512 to five targets 224, 520. If the user did not use a hub 518 (as shown in Fig. 10(a)), the user would have to create a total of 15 links among those objects. On the other hand, if the user uses a hub 518 as shown in Fig. 10(b)), the user would have to create and maintain only eight links. Message hubs 518 can hold one kind of message only (*i.e.,* messages produced from a single message definition 512). Targets of hubs 518 have durable subscriptions. The system 100 keeps track of the messages each target object 224, 520 has received from the hub 518, as well as those that the target objects 224, 520 have not vet received. If a target object 224, 520 becomes inactive, the system 100 remembers the last message that the target object 224, 520 has received. When that target object 224, 520 next becomes active, the system 100 delivers only those messages that the target object 224, 520 had not yet received. If hub subscriptions were not otherwise durable, target objects 224, 520 would receive messages that arrived at hubs 518 while the target objects 224, 520 were active, but would never receives messages that arrived at the hubs 518 when the target objects 224, 520 were not active.

The user can choose from two messaging styles the user wants the system 100 to use when delivering messages from the hub 518: (1) point-to-point, where the system 100 delivers each message to the first available target only; or (2) publish/subscribe, where the system 100 delivers each message to every object the user has identified as a target of the hub 518.

If the user wants to screen a certain kind of data out of pan of an integration flow 540, the user must use a filter definition 516. Filter definitions 516 specify criteria based on message data (*i.e.,* data that passes the criteria continues through the flow), while data that does not pass the criteria is discarded.

When the user wants to filter a certain kind of message, the user creates a filter definition 516 and assigns it to one or more links between objects 540 that handle that kind of message. The system 100 applies the criteria in the filter definition 516 to all messages sent along those links.

For example, consider the situation in which a hub 520 sends messages containing data on new customers to a target adapter 224. The user may want only data on customers who have not yet paid to reach the target adapter 224. In order to do so, the user would create a filter definition 516, which specifies the criterion "Status = Paid", and assigns it to the link between the hub 518 and the target adapter 224.

The user can create one or more filter definitions 516 for each message definition 512 in the user's integration flow 540. The user can assign a single filter definition 516 to multiple links, or the user can assign different filter definitions 516 for the same kind of message to different links.

For example, consider the situation in which a hub 518 sends messages containing data on new customers to two adapters 220. The user may want one adapter 220 to receive only data on customers who have paid, and the other adapter 220 to receive only data on customers who have not yet paid. The user would, thus, create two filter definitions 516. One specifies the criterion "Status = Unpaid", and the other specifies the criterion "Status = Paid". The user then would assign each filter definition 516 to the appropriate link.

When the user creates a filter definition 516 for messages that do not contain tables of data, the criteria the user specify affects the entire message. The entire message either passes the filter criteria and continues through the flow, or it does not pass and is discarded.

When the user creates a filter definition 516 for messages that contain tables of data, the user can specify criteria that affect the entire message or that affect only the data within a table. If the user specifies criteria for message items in a section 620, the entire message either passes the criteria and continues through the flow, or it does not pass and is discarded. If the user specifies criteria for message items in a table 640, the message continues through the flow with only those rows of data that pass the criteria. Rows that do not pass the criteria are discarded.

For example, consider the situation in which a message contains a table 640 with nine rows of data, one for each of nine new customers. If the user set up a filter definition 516 that filters out customers who spent $1000 or less, rows containing data on customers who spent more than $1000 would continue through the flow, while rows containing data on customers who spent $1000 or less would be discarded.

After the user has created a filter definition 516, the user can test it to make sure it works properly before using it in an integration flow 540.

Once the system objects the user wants to use in an integration flow 540 exist, the user can indicate how the user wants the system 100 to route messages among them. To do so, the user sets up links among the integration objects 530. Each link establishes one object as a source and the other as a target, or one object as a requester and the other as a replier. Source adapters are always message sources. They can send messages to target adapters of the same agent service type (*e.g.,* an SAP R/3 source adapter can send messages to an SAP R/3 target adapter), to message hubs 518, and to transformers 520.

Transformers 520 can be targets, requestors, and sources. They can receive primary input messages 920 from source adapters 222, message hubs 518, and other transformers 520. They also can request supporting input messages 940 from reply adapters 226 and message hubs 518, and send output messages 960, 980 to target adapters 224, hubs 518, and other transformers 520. Message hubs 518 can be targets and sources. Target adapters 224 are always targets. They can receive messages from source adapters 222 of the same agent service type, from hubs 518, and from transformers 520.

By default, the system 100 uses "message persistence". That is, it writes each message it delivers from one integration object 530 to another to stable storage in a location the user specifies. If a system failure occurs while a message is in transit, the system 100 can retrieve the message from storage when the system is restored and deliver the message to its targets.

Because message persistence increases system overhead, the system 100 allows the user to turn off persistence for any integration object 530. However, if a system failure occurs while messages to or from that object are in transit, those messages might be lost. The system 100 offers other delivery-related options that help the user manage the user's system resources. The system 100 maintains message holding areas for each integration object in an integration flow. The user can also control the size of these holding areas.

The user can limit the number of messages the system 100 holds for each object at one time, and the user can limit the length of time the system 100 holds each message. If an integration object 530 produces messages more quickly than its targets can receive them, these limits can prevent the object's holding area from growing to a size that strains system resources.

The user designs all integration flows within a project on the workbench 120. Those integration flows that the user designs and saves (*i.e.,* the definition 510 and integration objects 530 that the user creates, and the links among them) are all stored in the repository 140. The project is a logical structure that lets the user view the repository 140. Each installation of the system 100 has one project and one repository 140.

The general structure and design philosophy of the message object used by all message producers in the system 100 will now be disclosed. The message model as disclosed herein is infinitely extensible and useful for convening to and from native file formats as well as for sending internal messages from node to node in the system 100. The message is hierarchical in nature and uses a name/value pair paradigm to represent the data. Data represented by the message model according to the present invention is always object based. It is an instance of a Java object of a certain class. Each data node is type-safe in the sense that it may only contain data that is of the specified class. The structure of a message is metadata-driven.

That is, well-constructed messages are always built using the scheme laid out in an object known as the message definition 512. Every message of a certain "type" is built from the same message definition 512. The message definition 512 is itself an instance of a message, although its nodes have been extended to contain information on how to build instances of the format it describes, as well as optional information on how to convert data to and from a native application file format.

As noted briefly herein above, a message 600 is a tree-structured collection of simple and compound objects. All objects that can appear in a message are various types of "message entries". In a presently preferred embodiment of the invention, a message entry comprises one of following types: (1) a data element: (2) an array element: (3) a table element: and (4) a section element or "message link". The message always has a single section element at the top of the tree, known as the "top level section". This and other sections may contain instances of any of the four element types.

A data element contains "atomic" data, although the data is wrapped in a Java class. For example, integer data is stored in a java.lang.Integer object. data/time information is encapsulated in a java.util.Calendar object, and so forth. An array element is a collection of one or more primitive elements. An array's length is specified in the metadata, although this length may be specified as an allowable range, in which case the length is determined by parsing a native application's file record. A table element is actually an isomorphic collection of section elements, which means that each "row" of the table is a section containing exactly the same combination of names and types. It also has a potentially variable range specification. A message link is a pointer to another persistent message definition in the system and is used to merge formats. This is useful for implementing "redefines". The message can represent optional data, as well as default values, as dictated by the message definition.

In its simplest usage, one creates an empty generic message is created by invoking a static factory method in the message definition class. This creates a message with all the proper name/value pairs, but each data item is set to null. The only publicly exported message constructor requires a message definition as a parameter, ensuring proper form. The message API provides a way to access its elements, either via named lookup or through section iterators. It should be noted at this juncture that the message supports a hierarchical naming scheme using a configurable separator, allowing full or relative "pathname" access to any component in the hierarchy.

A section 620 is a non-repeating group of message elements. Such section elements do not themselves contain actual data. Instead, they contain other message elements that contain data (*i.e.,* they contain items 660). Sections 620 can contain any combination of message element types.

A table 640 is a group of section elements, called rows that can repeat any number of times. Table elements also do not contain actual data. They contain other message elements that contain data (*i.e.,* they contain items). Tables 640 can contain any combination of message element types.

An item 660 is a message element that contains data. Items 660 are the lowest level message elements in the hierarchy of the message definition. They cannot contain other message elements.

The user designs all integration flows 540 within a project on the workbench 120. Those integration flows 540 that the user designs and saves (*i.e.,* the definition 610 and integration objects 620 that the user creates, and the links among them) are all stored in the repository140. The project is a logical structure that jets the user view the repository 140. Each installation of the system 100 has one project and one repository 140.

In accordance with another important aspect of the present invention, system 100 comprises a distributed system. That is, the user can run the system components that make up the system 100 on one or more physical machines (*i.e.,* hosts), but all of the components working together as one application.

A node is a physical process that runs on a host and supports one or more services. Each node is a Java virtual machine (JVM) and is recognized by the operating system as a javaw.exe process. The user must create at least one node for each host that runs an enterprise application the user want to integrate. The user can have as many nodes as the user's business requirements dictate.

There are two primary interfaces within the system 100: (1) the workbench 120; and (2) the administration console 160. The workbench 120 provides tools for creating and modifying integration flows 540, while the administration console 160 provides all of tools for managing the system nodes and services. Both are described in greater detail herein below.

Creating an integration flow 540 in accordance with the present invention may be done as follows. The user first must obtain agent services from the system 100. On the administration console 160, the user then configures the system nodes of each host machine on which an application the user wants to integrate is running. Then, the user configures the required services on the nodes, including an agent service for each application that the user is going to integrate.

In order to plan an integration flow, the user should determine the following factors. For example, the user must determine the kinds of data the user need to extract from applications and propagate to applications. The user should also consider: (1) how the user wants to route messages among the system objects; (2) how the user needs to transform the data from one application so it can be used by other applications; and (3) whether the user needs to filter certain data out of the flow.

On the workbench 120, the user should first create a project, and then create an integration flow in the following manner. First, the user should configure adapters 220 to interact with the user's applications and create the message definitions 512 the user needs to produce the proper messages in the integration flow 540. These message definitions 512 should then be tested to make sure they produce the proper messages.

Next, the user should create hubs 518 to hold messages from adapters 220 and transformers 518. The user may then create mapping definitions 514 to transform messages from the source application 541 to messages for the target application 549. Furthermore, the user may create sample input messages 920, 940 and use them to test each mapping definition 514 to make sure it produces the proper output messages 960, 980.

Then, the user should create the transformers 520 necessary to implement those mapping definitions 514. As needed, the adapters 220, transformers 520, and hubs 626 should be linked. If the user needs to filter certain data out of the flow 540, the user should then create filter definitions 516. Preferably using sample messages, the user should next test the filter definitions 516 to make sure they filter out and proper data. Then, the user may assign the filter definitions 516 to links between objects.

On the workbench 120, the user should then check the validity of the integration flow 540 and correct it as necessary. The user may then save and close the project. On the administration console 160, the user should then configure the log viewer so the user can view messages on system activity. If the user wants to view statistics on system activity (*e.g.,* number of messages produced in specific time intervals by individual transformers), the user should then configure the statistics viewer.

Again, on the administration console 160, the user may start the integration flow by starting the relevant system nodes and services, including the agent services for the applications the user is going to integrate. Next, the user will check the log and statistics to make sure the integration flow 540 is running properly. If the user needs to make changes to the integration flow 540, the user should accordingly stop the relevant services on the administration console 160, modify the integration flow 540 on the workbench 120, and restart services on the administration console 160.

The following describes to one of ordinary skill in the art the procedures that may be used with a source adapter wizard, a target adapter wizard, and a reply adapter wizard, all in accordance with the present invention, to properly configure an adapter 220. In general, there are four separate processes.

First, one must carry out the following general steps: (1) name the adapter 200; (2) choose the agent service one desires to host the adapter 220; and (3) choose the message definition 512 for messages that the adapter 220 is to produce, receive, or reply to. Second, one must carry out the following general steps: (1) choose a particular adapter 220 that is to be configured (*i.e.,* standard or custom); (2) provide connection information: and (3) provide implementation information. More often than not, the step of providing implementation information includes the step of extracting the message definition 512 of that adapter 220.

The third process depends on the type of adapter 220 to be created. If one is creating a source adapter 222, one must specify the targets to which the adapter 222 is to be used to send messages. On the other hand, if one is are creating a target adapter 224, one must specify the sources from which the adapter 224 is to be used to receive messages. If one is creating a reply adapter 226, furthermore, one must specify the requesters (*i.e.,* transformers 520) to which the adapter 226 is to be used to send reply messages.

One must finally specify delivery options (*e.g.,* message lifetime) for the adapter's messages. However, before one can create an adapter 220, the agent service that is to host the adapter must exist on the administration console 160. For example, before one can create an EntireX Broker adapter, the agent service for the EntireX Broker must exist. If one wants to also specify source, target, or requester objects for an adapter 220 using the adapter wizard, those objects must exist before one opens the adapter wizard.

Referring again to Figs. 4(a) and 4(b), agent-adapters 200 interface with the application resources on one side and the infrastructure of system 100 on the other. On the one hand, the adapter half of each agent-adapter 200 uses the API of its particular application resource, or any other published interface mechanism. On the other hand, the agent side conforms to the event and messaging model of system 100 as described in greater detail herein below. In combination, the agent and adapter mediate the differences in interface protocols and data structures, providing a uniform, normalized view of the business events that they publish and consume.

Unlike other application integration solutions, the extensible design of the adapter architecture provides ― the ability to seamlessly accommodate change to application interfaces, while still supporting the current set of basic interfaces. This is particularly important with systems that are already in production. For instance, a packaged application having a basic set of interfaces A' which are supported by a particular version of agent-adapter 200. If a newer version of the application incorporates a newer set of interfaces A'', the user may choose to simultaneously adapt to the older interfaces A' for the production environment, while adapting to A'' for a pre-production environment in order to test the new interfaces. With this facility, incremental change into the integration environment can be negotiated seamlessly.

Every component of system 100 is distributable across all supported platforms, agent-adapters 200 flexibly extend this to the participating applications. Key components of system 100 (e.g., agent-adapters 200 or integration server 26) can, thus, be co-located with applications, or accessed remotely, or both. Numerous deployment configurations are possible ― the environment is optimized to balance availability, performance and administration requirements.

Many standard adapters 200 are supplied with system 100, including SAP. MQSeries. ENTIRE Broker, RDBMS & CICS. As such, the adapters 200 support rapid deployment and easy integration of these information resources. They also reduce training and skills required. The ADK 130, including all of its automation wizards templates, provides high productivity. It is adaptable to any user's IDEs, and it facilitates customizing supplied adapters and developing custom interfaces. The adapters 200 are made up of popular language and interface bindings, including C++, Java, EJB, CORBA, COM, and Natural. In such a manner, they plug into any user's environment and tools. They leverage in-house language expertise, and they are adaptable to complex resource interface requirements. The agent-adapter architecture according to the present invention, thus, provides a robust facility supporting far more than simplistic interfaces. It ensures a uniform event across the resource portfolio.

The agent-adapter subsystem comprises the runtime interface modules that connect external applications to the EAI. On the adapter side, it is the physical interface to the external application. The agent side acts as a host for the adapter, manages resources and publishes events on behalf of the adapter.

The base adapter classes within system 100 are as follows. The "Adapter Main" class provides the ability for the adapter to start itself and process its configuration definitions. It is also responsible for instantiating instances of the classes to be used by the four possible types of adapter communications. The "Adapter Receiver" class provides the ability for the adapter to receive a document from EAI and pass it on to the third party package. The "Adapter Sender" class provides the ability for the adapter to receive a document from a third party package and pass it on to EAI. The "Adapter Responder" class provides the ability for the adapter to receive a document from EAI, pass it on to a third party package, receive a response from the third party package and return the response to the EAI for processing. The "Adapter Requestor" class provides the ability for the Adapter to receive a document from a third party package, pass it on to EAI for processing, receive a response from EAI and return the response to the third party package.

The EAI agent-adapter interface according to the present invention is realized by the adapter implementing several Java interfaces, while the adapter to agent interface is realized by the adapter using known methods of the node/agent components.

According to still another important aspect of the present invention, every adapter must implement the following interface. For the AdapterBridge, the method:
**initialize(Agent-adapterConfig)**
is invoked by the agent during initialization and used by the adapter to bootstrap itself. The adapter bridge is within the method that the adapter 220, 220', 220'' must query the agent 210 to determine what document definitions are to be processed and the type of processing provided for each document. This is accomplished using the following agent methods:
**GetsendDocumentDefinitions()**
**getReceiveDocumentDefinitions()**
**getRequestDocumentDefinitions()**
**getResponseDocumentDefinitions()**
This method will then parse the AdapterConfiguration document to locate the subsection pertaining to the specific document definition, harbor the document specific configuration information and create an instance of a specific class based on processing type (send, receive, request or response). It will subsequently either start a Thread(Send or Request types), issue the Agent.setReceiveListener()(Receive type) or issue the Agent.setResponseListener()(Response type) to register the agent callbacks to be invoked when a message arrives.

The **restart ( )** method is invoked by the agent 220, 220', 220'' to cause the adapter 210 to terminate all activity, reload configuration data and restart itself. The **shutdown ()** method is invoked by the agent 220, 220', 220'' during termination processing.

The following interfaces are also implemented by the adapters 220 as described herein below. For the ReceiveListener interface, an
**onReceiveMessage(ReceiveData)**
method is invoked by the agent 210 on receipt of a JMS message, and he agent will pass the document on to the adapter for processing. This processing will occur under control of the JMS session thread. The adapter processing will basically consist of a one way routing of the document to the third party software application using the interfaces provided by the application. It should be noted, however, that there is no reply expected from the application on this type of call. The adapter 220, 220', 220'' will be expecting only a success or failure response from the application. If EAI is expecting an actual response from the third party system, the ResponseListener interface should be used instead.

For the SendListener interface, an
**onsendTimerEvent(SendData)**
method is invoked by the agent 210 if the adapter 220, 220', 220'' is utilizing the timer feature of the node/agent. This feature is useful when the third party interface has no way to implement an event driven notification for documents to be sent to EAI for processing.

For the RequestListener interface, an
**onRequestTimerEvent(RequestData)**
method is invoked by the agent 210 if the adapter 220, 220', 220'' is utilizing the timer feature of the node/agent. This feature is useful when the third party interface has no way to implement an event driven notification for documents to be sent to EAI for processing. It should be noted at this juncture, however, that the RequestListener interface differs from the SendListener interface, in that it will send the document to EAI and wait for a document in response. This response will then be passed back to the third party system.

For the ResponseListener interface, an
**onResponseMessage(ResponseData)**
method is invoked by the agent 210 on receipt of a JMS message, and the agent 210 will pass the document on to the adapter 220, 220', 220'' for processing. This processing will occur under control of the JMS session thread. The adapter processing will consist of routing of the document to the third party software application using the interfaces provided by the application and then sending the response back into the System 100 for additional processing. However, if the System 100 is not expecting an actual response from the third party system the ReceiveListener interface should be used instead.

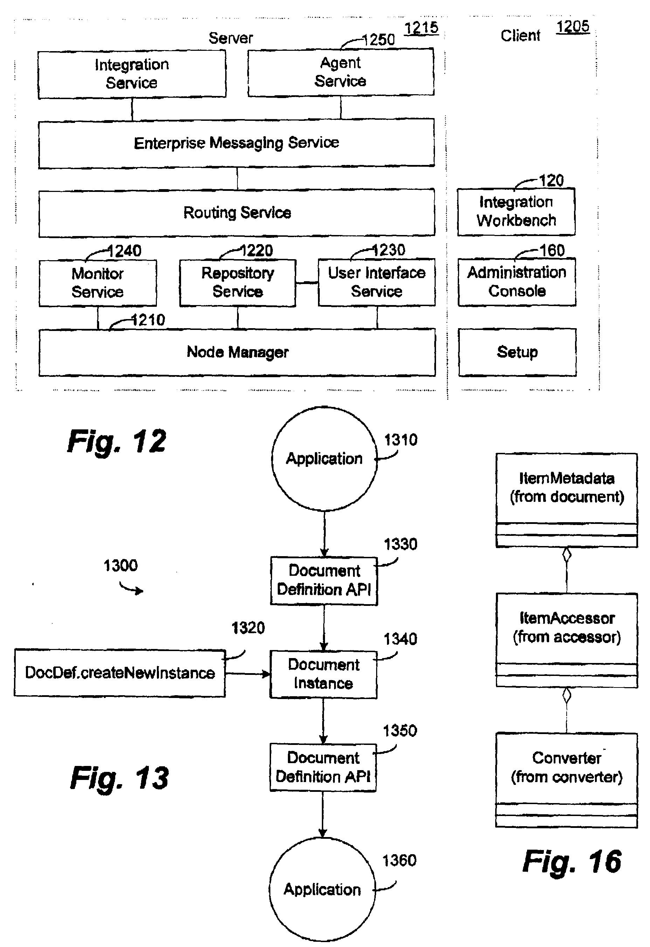

When a user installs system 100, the main component the user installs is a node manager 1210 as shown in Fig. 12. The node manager 1210 is a Java virtual machine (JVM), which provides services to all of the other nodes and services the user installs in the system. System installation automatically creates repository service 1220, user interface service (UIS) 1230, and monitor service 1240 on the machine that hosts the node manager 1210.

Before the user can start a client 1205 (*e.g.,* the administration console 160 or the integration workbench 120) session, the user must start the node manager 1210. As noted above, node manager 1210 automatically starts the repository service 1230 and the UIS 1240. Otherwise, the user cannot use the administration console 160 or the integration workbench 120 unless those services are running. Depending on the particular administration console 160 or integration workbench 120 task the user is performing, other services may be required.

Once the node manager 1210 is running, the user must configure the system nodes and services, including agent services 1250 for the applications the user wants to integrate. The user initiates this by first using an administration console 160 session. The user can then start an integration workbench 120 session and begin designing integration flows 540 as shown in Fig. 5(c). When the user is finished designing such integration flows 540, the user may thereafter start them by starting nodes and services from an administration console 160 session.

When the user starts a client session, the user identifies the node manager 1210 as the client's server 1215. The user may connect as many integration workbench 120 and administration console 160 sessions to the node manager 1250 as the user's business requirements dictate. All such integration workbench 120 and administration console 160 sessions will be read-only. Console sessions connected to the node manager 1250 have access to the contents of the repository service 520 that is running on that node manager 1210. When working with system 100, the user must run the node manager 1210, an administration console 160 session, and a integration workbench 120 session.

### Nodes

As noted herein above, and referring now also to Figs. 13(a) through 13(c) in conjunction with Fig. 12, a node 1310 is a physical process that runs on a host 1300 and supports one or more services. Each node 1310 is a Java virtual machine (JVM), and is recognized by the operating system as a javaw.exe process. The user must create at least one node 1310 for each host 1300 that runs an enterprise application that the user wants to integrate. The user can have as many nodes 1310 as the user's business requirements dictate.

A service is an object that provides product functionality. System 100 generally comprises system services and application services. A client graphical user interface (GUI), such as the integration workbench 120 and administration console 160, enables the user to work with system 100. Clients 1205 (Fig. 12) may run on the same physical host 1300 on which nodes 1310 and services are running, or it can run on a different host 1200.

Each enterprise must also have a node manager 1210. The node manager 1210 provides services to all of the other nodes 1310 in the system 100. It runs the user interface service (UIS) 1230 and the repository service 1220. Fig. 13(a) illustrates one environment having three hosts 1300. Host1 is running the Node Manager 1210, while Host1 and Host2 are both running nodes 1310.

System 100 is a collection of system services and application services. System services support nodes and services. For example, the monitor service 1240 stores system runtime data for nodes 1310 and services. Application services provide functionality to system 100. For example, CICS agent services support adapters that need to connect to CICS applications.

### System Services

System services according to the present invention generally comprise a user interface service (UIS) 1230, a repository service 1220, and a monitor service 1240. UIS 1230 more specifically provides the facilities necessary to run client components (*i.e.,* the integration workbench 120 and the administration console 160). Likewise, the repository service 1220 stores the configurations for all configured services and integration flow objects 540. Finally, monitor service 1240 stores system runtime data, including system logs and statistics information.

### Application Services

Referring again to Fig. 12, it can be seen that application services used in system 100 include the enterprise messaging service (EMS) 1260, which enables the system 100 to use multiple messaging modes, including point-to-point, publish/subscribe, and request/reply messaging. EMS 1260 also supports message hubs and provides message persistence. Application services also include an integration service (IS) 1270, which enables the system 100 to transform messages, including splitting messages, combining messages, and manipulating message data. The IS 1270 additionally supports transformers. RMI factory services (not shown) may optionally be used as an application service to manage remote method invocation (RMI) links to external applications. Routing services 1280 also comprise an application service, which enables the system 100 to direct messages through the system based on a message's content, including filtering message content according to criteria the user define, and determining whether messages are valid. The routing service 1280 also supports filters. Agent services 1250 support adapters. The user must install an agent service on each host 600 that runs an enterprise application the user want to integrate. As shown in Fig. 13(b). Host1 and Host2 are both running services. Host3 cannot run services because is does not have a node 1310.

### Clients

The system 100 includes two client GUIs that enable the user to work with integration flows 540. Clients may run on any host 1300, regardless of whether the host 1300 runs the node manager 1210, runs nodes 1310 and services, or does not run any nodes 1310 or services. The user can install as many clients as the user's business requirements dictate. For example, a user might want to install clients 1205 on a network-attached host to work with the user's integration flows 540 from a remote location. In Fig. 13(c), both Host2 and Host3 are running the administration console 160 and integration workbench 120 clients. Host1, on the other hand, is not running either the administration console 160 or integration workbench 120 clients.

There are two primary interfaces within the system 100: (1) the workbench 120 and the administration console 160. The workbench 120 provides tools for creating and modifying integration flows 700, while the administration console 160 provides all of tools for managing the system nodes and services. Both are described in greater detail herein below.

Creating an integration flow 700 in accordance with the present invention may be done as follows. The user first must obtain agent services from the system 100. On the administration console 160, the user then configures the system nodes of each host machine on which an application the user wants to integrate is running. Then, the user configures the required services on the nodes, including an agent service for each application that the user is going to integrate.

In order to plan an integration flow, the user should determine the following factors. For example, the user must determine the kinds of data the user need to extract from applications and propagate to applications. The user should also consider: (1) how the user wants to route messages among the system objects; (2) how the user need to transform the data from one application so it can be used by other applications: and (3) whether the user need to filter certain data out of the flow.

### The Conversion Process ― Accessors and Converters

As noted herein above, another important function of the message model is to import to and export from native file formats from any application. Files containing both character and binary data in application and platform-specific formats are brought into the "canonical" form described, where the data are represented as Java objects. A key goal in the design of this scheme is to maximize reusability. Therefore, a given message definition can be custom-configured with what is conceptually a "device driver". That is, two native file formats, which structurally represent the same data format, can produce identically structured canonical messages when configured with the proper drivers. The "device driver" is actually a set of Java objects called "accessors" and "converters", which are attached to their appropriate nodes in the message definition metadata, and global metadata.

A fully configured message definition that has been persisted via Java object serialization then becomes a packaged and ready-to-go native file format parser and formatter for a given native file format conversion process takes full advantage of the latest character set encoding and localization facilities provided by the Java Development Kit (JDK). All native character strings are viewed as byte arrays and are converted internally to Unicode for use by the parsing and formatting routines.

It may be appreciated that Version 1.1.6 of the JDK supports nearly 100 different character encodings, and that the message model according to the present invention handles all of them with the same logic. The message model also strives to use inheritance of item attributes as much as possible. Thus, application-specific data is assumed to have a default byte-order, encoding and locale. Individual accessors may override any of these, but in practice this shouldn't happen too often.

The accessors and converters are two-way objects. They can convert native data into a Java object to be stored in a message tree and also can transform a Java object back to its native representation. In the spirit of reusability, one object of the present invention was to minimize the total number of conversion classes that need to be written. Accordingly, the conversion process described herein may be viewed as a problem with two axes, tokenization/formatting on one axis and byte conversion on the other. An instance of an accessor class is a Java object that knows how to sift through the "syntactic sugar" in a native field and isolate out the actual bytes that a specific converter needs to produce or convert from a Java object.

Consider, for example, the case where a floating point data field is marked on both sides by a predefined byte or character sequence. These are known as "markers" in system 100. A specific kind of accessor (in this case a trailing marker accessor) knows to skip over the leading marker and find the location of the trailing marker to isolate the four bytes which are actually the "meat" of the floating point data. The floating point byte converter previously configured in the message definition produces a Java Float object from the bytes. In the other direction, the accessor writes out the leading marker, tells the converter to write out the native bytes, and then the accessor terminates with the trailer. One distinct advantage of this scheme is that only a handful of accessors and approximately two dozen converters need be written. Since the accessors and converters of the present invention are essentially read-only objects once configured, the message definition size can be kept relatively small due to object sharing where possible. The Java garbage collector conveniently removes issues of who owns which object in this case.

Some accessors and converters need to be configured with initial settings, while others do not. These objects are packaged as JavaBeans, with simple property dialogs where needed. In accordance with a presently preferred embodiment of the invention, the following table sets forth the accessors supporting the system 100. As new types are needed, they can be seamlessly added to system 100 without the need for writing new converters.

| Accessor Type | Characteristic |
|---|---|
| Fixed length | Accessor field is always a fixed length. This fixed length indicates either the entire field length, or its length minus any markers. |
| Indicated length | Essentially the same as a fixed length accessor, except that another integer-compatible field in the data contains the length specifier. These length indicators are what are known as "linked" objects, and may optionally be flagged as "transient" objects, the details of both of which are described in greater detail herein below. |
| Trailing marker | The field terminates at the trailing marker. |
| Implied length | The field length is implicit in the converter type - mostly used for binary formats. |
| Section-delimited | If the containing section uses a delimiter scheme, the delimiter can signal the end of the object. |
| Syntax-based object | The object matches a certain regular expression. |

It should be noted that each of the accessors described above are item accessors. While much simpler, section accessors may likewise be used. Such section accessors have optional markers, and may also use a delimiter scheme. To some extent, the inclusion of such a delimiter scheme depends on the successful parsing of its contained elements. Delimiters use either a prefix, infix or posifix scheme, and are in fact the same marker elements used to constrain fields. Table accessors extend section accessors to work with a linked item that indicates a record count.

The initial number of converters supporting the system 100 is relatively small, but is very complete based on an analysis of commercial file formats. The converters according to the present invention comprise two basic types: either a character-based convener or a binary converter. All character converters inherit from a common base class that provides the notion of justification and padding characters. Such padding characters may be specified as absolute byte value characters or as Unicode characters, which are mapped to the native encoding. Character converters according to the present invention include:

| Character Converter Type | Characteristic |
|---|---|
| Decimal | Formats and parses according to a "format mask", derived from that specified in java.text.DecimalFormat. The mask is of the form #,##0.0##, and can specifly features such as leading or trailing minus signs, etc. The mask grammar will be extended as needed to enable any pre- or post-processing where the grammar is insufficient. |
| Integer | Same as decimal converter, but no decimal places are allowed. |
| Currency | Also supported by Java, a further refinement of decimal converter. |
| Date/time | Uses java.text.SimpleDateFormat mask specification. Thisformat is quite extensive, and should satisfy all needs. |
| Generic string | Relies on fixed length, trailing marker or section delimiter for demarcation. |

Binary converters inherit the default message-specified byte-order, but may be individually overridden via a constructor argument. Those binary converters according to the present invention include:

| Binary Converter Type | Characteristics |
|---|---|
| Signed/unsigned 2's | Complement numbers of 8, 16, 32 and 64 bits as well. Unsigned types are promoted to the next larger Java integral type if needed. It should be noted that Java includes an arbitrary precision package in java.math for unsigned longs. |
| IEEE 754 float and double (1985 specification) | JNI can be used for this, as well as IntegerBits and LongBits converters provided in the Float and Double classes. It should be noted that this may only be supported on platforms of a native float type. |
| Packed decimal | |

Converters may produce or consume more than one Java type. For example, a native float converter can reasonably map to a Float, Double, Integer, Long or String, among others. All converters implement a native converter interface, which specifies an "Object load(Class, ...)" and "void store(Object ... )" functionality. However, the actual subclass produced depends on which other converter interfaces are implemented by the object. These are essentially marker interfaces, which do not contribute to any new methods. For example, a DoubleConverter, IntegerConverter, StringConverter, and so forth may be used in the system 100 without departing from the true spirit and scope of the present invention. A configuration tool, such as a graphical user interface (GUI) can, through class introspection, determine an appropriate list of converters to present for use in a particular case. Inside the load and store methods, the converter examines which of its supported interfaces it implements corresponding to a class the Object is an "instanceof' or the supplied Class. The generic Object returned or processed is now actually of a proper subtype.

### Markers

Markers may be thought of as syntactic sugar, useful both as field delimiters and individual item tokens. All objects, whether sections or items, may include a leading marker, trailing marker, or both. In accordance with a presently preferred embodiment of the invention, there are three basic marker formats. Two formats, known as a fixed pattern marker and a "strtok"-style marker, specify either a byte pattern or a Unicode string that is mapped to the native character encoding. Comprising a set of characters of which 0 or more occurrences are found, the"strtok"-style marker is useful for indicating white space or binary padding. The third format, key-based markers, have a pattern in which the key of an object being processed is substituted into a pattern. For example, the marker pair 〈X -〉 and 〈/-X-〉 would become 〈Customers〉 and 〈/Customers〉, which would be useful for parsing XML-style messages, and in general help aid in locating optional items.

### Optional Arguments

The parsing and recognition of optional arguments is a difficult process. For example, if the input data specified is five optional strings of any length, and three strings are successfully read, it may not be possible to know which string is which. Optional items not found will be set to null in the message. A set of conditions under which optional items may be recognized in accordance with the present invention follows.

Consider the case in which a section uses delimiters and a delimiter for an empty field is found. For example, a user would know that the second element was missing if the input was "Able,,Charley" in an infix scheme. Another condition in which optional items may be recognized occur when the fields use the key-based marker for self identification. In the style of C++ default function arguments, yet another condition would arise if all of the optional arguments come at the end of the list and the section end is detected, the parse is successful. In general, whenever a user fails to parse a field correctly, and the field is optional, the user skips to the next field and tries again until the end of the section is reached. A section with a trailing marker (or end-of-file) would be required here. At the end of the section, if non-optional items have not been assigned a value, the parse fails. This would not guarantee correct results if the format of successive items would be ambiguous.

Defaults work differently, as per whether this is a section or an item. Message metadata for an item holds a default object. By default, if the object supports the cloneable interface, the object is cloned from the metadata to the message instance. If it does not support the interface, the value is stored as a String in the metadata, along with its class and the Java Reflection API is used to invoke the object's String-based constructor to supply the message with an object. For sections, the default is a link to another persistently-stored message definition. The top-level section of the referenced message definition would be grafted into the message metadata and a message of the combined structure would bes produced.

### Linked and Transient Items

In some cases, native data is self-describing. For example, a table may be preceded by its row count. Users would not want to include this count in the final canonical message produced, however, because it is self-evident from the length of the Java array representing the table. In this case, the node may optionally be marked as transient. It is temporarily added to the message and removed once the table has been built and added. In this way, the user may configure a message definition with two different drivers to produce the same canonical message. That is, if in one case, the table length were determined without a count indicator, it would not produce that integer field in the node. Tables should be isomorphic in this case, so the argument should be transient.

Continuing on with the above example, one may note that there is an inherent connection between the count and the table. As a result, both will be marked as having a link relationship. Both will additionally hold onto the relative and absolute pathname of the other object, plus a status indicator in their accessors as seen below.
COUNT-PROVIDER
COUNT-USER
LENGTH-PROVIDER
LENGTH-USER
REDEFINE-PROVIDER
REDEFINE-USER
In the case of redefines, the provider either provides a string or integral discriminant. The provider item must appear, in the parsing direction, before its user in the traversal and conversion. In the formatting direction, the provider is first written with a placeholder and subsequently filled in with its proper value. It should be noted that the count provider must use a fixed length format for the above to work.

### Validation Clauses and Relationships

The message definition has placeholders in its metadata items for a list of validation clauses and inter-message relations. In accordance with a presently preferred embodiment of the invention, validation clauses are all run on the converted message only after the entire message has been converted. The object design does, however, permit per-item validation clauses if desired. There is also a placeholder to specify relations between columns of a table in one message and columns in another one. This facilitates mapping of values and joins.

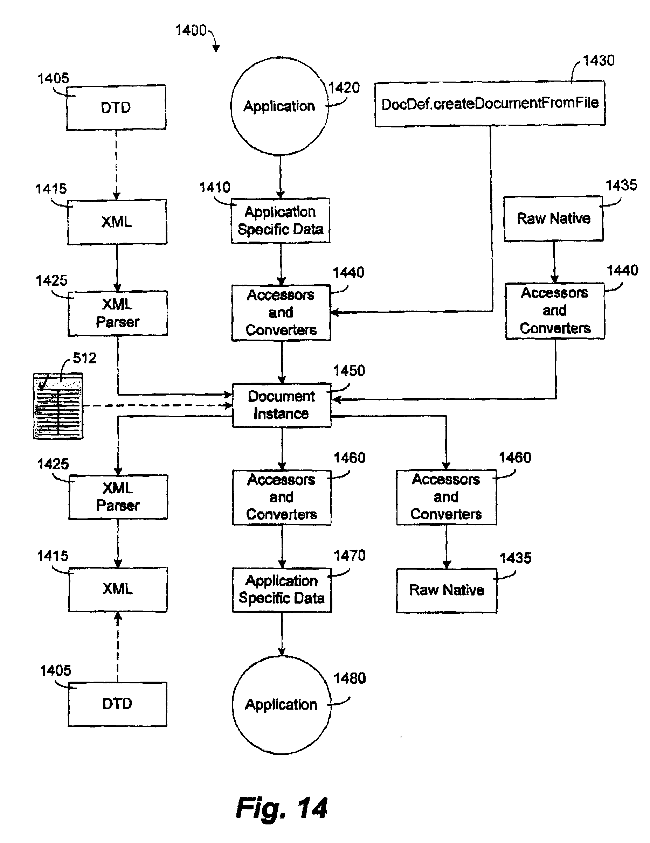

The manner is which message may be created, without and with converting the raw data, is shown in Figs. 13 and 14. Fig. 13 illustrates one method 1340 without converting the raw data that begins at the application 541.

The user creates an empty message (*e.g.,* "DocDef.createNewInstance") at 1320, and the empty message is populated with the application's data through the message definition API 1330. A message instance 1340 is, thus, created. The message instance 1340 then can then go through another application's message definition API 1350 in order to send the message to that application 1360.

When the need to convert the raw data arises, the method shown in Fig. 14 is employed. In the beginning application specific data 1410 is received from an application 1420. An empty message is created at 1430 and populated with not only such application specific data 1410, but also raw conversion information. The application specific data 1410, by way of the accessors and converters 1440 is sent to a message instance 1450, which also receives the information populated in the empty document at 1430. For example, this may be done by:
DocDef.createDocumentFromFile
The API supports both of the following methods to create the message:
DocDef.createDocumentFromFile
DocDef.createDocumentFromBytes
Then, through other accessors and converters 1460, the message can be converted into another application's application specific data 1470 and received by that application 1480.

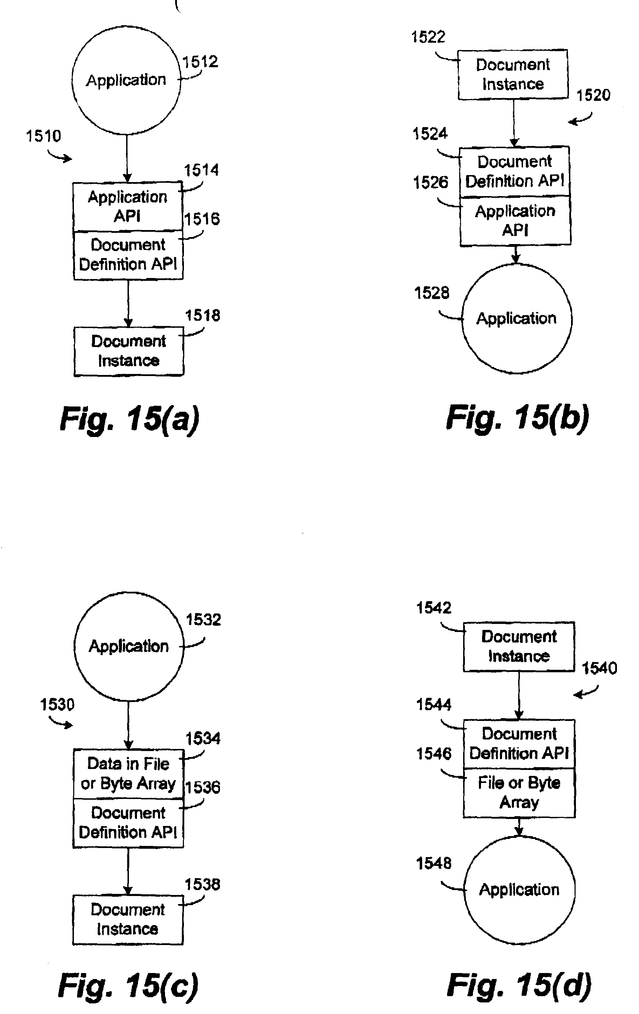

Referring now to Figs. 15(a) through 15(d), the benefits of the message object according to the present invention will now be described. Fig. 15(a) illustrates one method 1510 of creating a message without converting raw application data in accordance with the present invention.

An empty message is created by the application 1512 as a first step. This is done by creating a message definition 512 (*e.g.,* "def;//initialize elsewhere def.createEmptyDocument*(docname)*;"). The application API 1514 is coupled to the message definition API 1516, in order to populate the message by use of the message definition API 1516. The, message defaults may next be applied (*e.g.,* "def.applyDocumentDefaultValues*(docname)*"), and a message instance 1518 is, thus, created. The reverse method 1520 is shown in Fig. 15(b) where the message instance 1522 is sent through the message definition API 1524, which is coupled to the application API 1526, and is used to populate field values. The message is then sent to the application 1528.

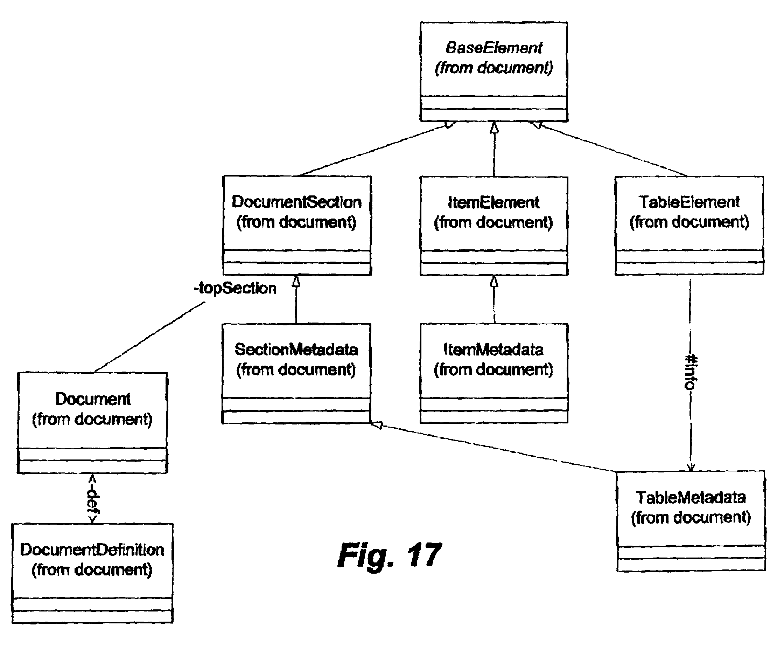

Creating messages with conversion of application data is a more difficult matter. As shown in Fig. 15(c), a method 1530 of converting messages according to the present invention from an application 1532 to a message instance 1538 begins with the message being sent from the application 1532 through a converter. The message definition API 1536 creates an empty message, populates the empty message with the data from the application 1532 (*i.e.,* either from a file or from bytes), and adds raw conversion information from accessors and converters according to the present invention. For example:
Document Definition def;//Add Accessors and Converters
Initialize elsewhere
def.createDocumentFromFile(*docname,filename*)
or,
def.createDocumentFromBytes(*docname,byte[]*)
The reverse method 1540 is shown in Fig. 15(d), where a message instance 1542 is sent through the message definition API 1544, to populate a file or byte array 1546 with the data from the message instance 1532, and then to the application 1548. For example:
Document Definition def;//Add Accessors and Converters
Initialize elsewhere
def.storeDocumentToFile(*filename*)
or,
def.storeDocumentToBytes(*byte[]*)
Class diagrams for similar such processes are shown in Figs. 16 and 17.

In accordance with another important aspect of the present invention, system 100 comprises a distributed system. That is, the user can run the system components that make up the system 100 on one or more physical machines (*i.e.,* hosts), but all of the components working together as one application. Every component of system 100 is distributable across all supported platforms. Agent-adapters 200 flexibly extend this to the participating applications. Key components of system 100 (e.g., agent-adapters 200 or integration server 26) can, thus, be co-located with applications, or accessed remotely, or both. Numerous deployment configurations are possible ― the environment is optimized to balance availability, performance and administration requirements.

### Operators

The following table generally describes all of the currently contemplated system operators, which a user can use to build expressions for message definitions, transformer definitions, and filter definitions. System 100 supports these operators.

| Operator | Description |
|---|---|
| && | Logical "and" |
| \|\| | Logical "or" |
| ! | Logical "not'' |
| = | Assignment |
| == | Logical "equal" |
| != | Logical "not equal" |
| + | Unary plus |
| - | Unary minus |
| * | Multiplication |
| / | Division |
| < | Less than |
| <= | Less than or equal to |
| > | Greater than |
| >= | Greater than or equal to |

### Functions

The table following on the next page generally describes all of the currently contemplated system functions, which a user can use to build expressions for validating or filtering messages and transforming message data. Each description includes what the function does, the parameters it requires, and the value it returns.

When transforming message data, the user typically uses these functions to take message item values from input messages and create message item values for output messages. When validating or filtering messages, the user usually uses these functions to create boolean expressions. The parameter values for these functions can either be message items or constant (*i.e.,* literal) values.

| Data Type | Literal Examples |
|---|---|
| Integer | 1234, 0xFF, 077, -1234 |
| Long | 1234, 1234L, -0xFF, 077L |
| Double | 12.34 |
| String | "Sagavista" |
| Boolean | true or false |
| BigDecimal | 12.34a, where "a" means arbitrary precision |
| Calendar | #DATE(2000, 2, 13) |
| | #DATE_TIME(2000, 2, 13, 23, 59) |
| | #DATE_FORMAT("M/d/yyyy", "2/13/2000") |

The system 100 also provides the functions described below, although a user can write the user's own functions for use with system 100.

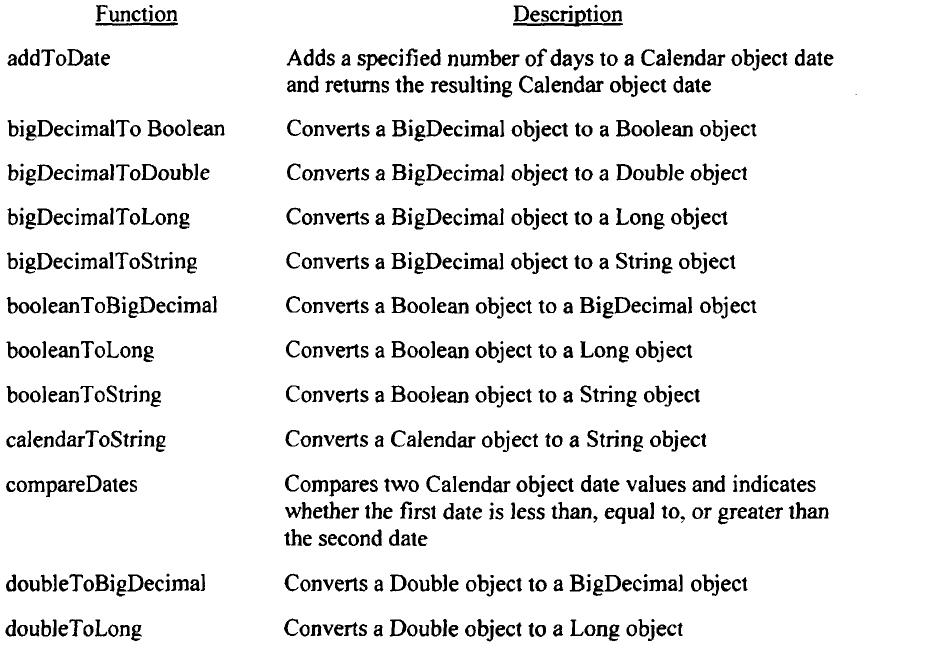

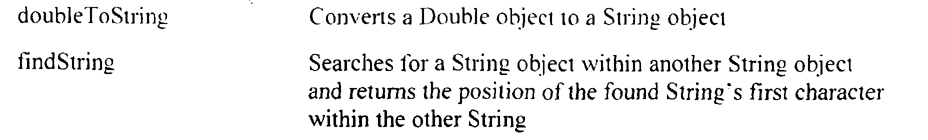

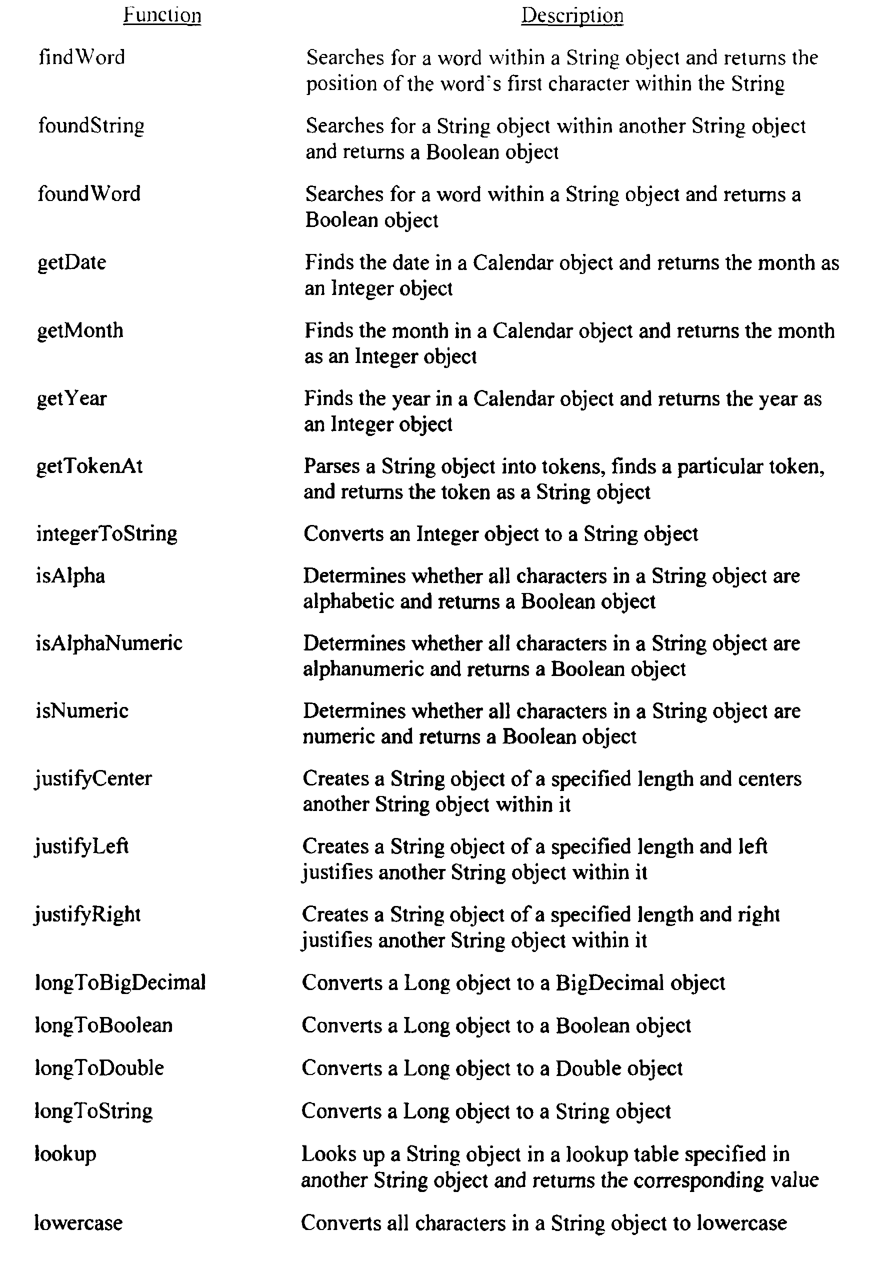

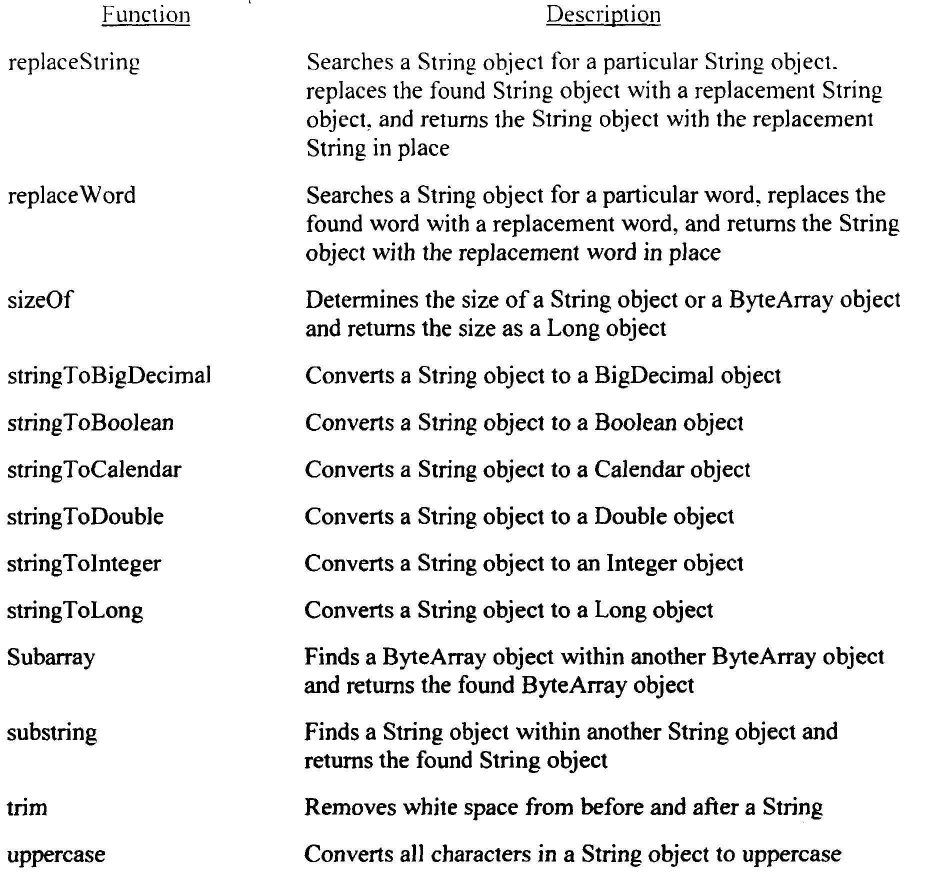

### addToDate

This function adds a Long object that specifies a certain number of days to a Calendar object date and returns the resulting Calendar object date.

### Calendar addToDate(Calendar,Long)

| Parameter Type | Value |
|---|---|
| (Calendar,Long) | Date, number of days to add to the date |

| Return Type | Value |
|---|---|
| Calendar | Resulting date |

### Example:

A message item named DatePurchased is defined as a Calendar object. For another message, the user need the value of DatePurchased plus five days in a Calendar object. The user would enter the function as follows:
addToDate (MsgDef.DatePurchased, 5)
If the value of DatePurchased were equivalent to February 13, 2000, the function would return a Calendar object whose value is equivalent to February 18, 2000.

### bigDecimalTo Boolean

This function converts a BigDecimal object to a Boolean object.

### Boolean bigDecimalToBoolean(BigDecimal)

| Parameter Type | Value | |
|---|---|---|
| (BigDecimal) | BigDecimal to convert | |

| Return Type | Value | When |
|---|---|---|
| Boolean | True | BigDecimal is any value other than 0 |
| | False | BigDecimal is 0 |

### bigDecimalToDouble

This function converts a BigDecimal object to a Double object.

### Double bigDecimalToDouble(BigDecimal)

| Parameter Type | Value |
|---|---|
| (BigDecimal) | BigDecimal to convert |

| Return Type | Value |
|---|---|
| Double | Resulting Double |

### bigDecimalToLong

This function converts a BigDecimal object to a Long object.

### Long bigDecimalToLong(BigDecimal)

| Parameter Type | Value |
|---|---|
| (BigDecimal) | BigDecimal to convert |

| Return Type | Value |
|---|---|
| Long | Resulting Long |

### bigDecimalToString

This function converts a BigDecimal object to a String object.

### String bigDecimalToString(BigDecimal)

| Parameter Type | Value |
|---|---|
| (BigDecimal) | BigDecimal to convert |

| Return Type | Value |
|---|---|
| String | Resulting String |

### booleanToBigDecimal

This function converts a Boolean object to a BigDecimal object.

### BigDecimal booleanToBigDecimal(Boolean)

| Parameter Type | Value | |
|---|---|---|
| (Boolean) | Boolean to convert | |

| Return Type | Value | When |
|---|---|---|
| BigDecimal | 1 | Boolean is true |
| | 0 | Boolean is false |

### booleanToLong

This function converts a Boolean object to a Long object.

### Long booleanToLong(Boolean)

| Parameter Type | Value | |
|---|---|---|
| (Boolean) | Boolean to convert | |

| Return Type | Value | When |
|---|---|---|
| Long | 1L | Boolean is true |
| | 0L | Boolean is false |

### booleanToString

This function converts a Boolean object to a String object.

### String booleanToString(Boolean)

| Parameter Type | Value |
|---|---|
| (Boolean) | Boolean to convert |

| Return Type | Value |
|---|---|
| String | Resulting String |

### calendarToString

There are two versions of this function.

The following function converts a Calendar object to a String object.

### String calendarToString(Calendar)

| Parameter Type | Value |
|---|---|
| (Calendar) | Calendar to convert |

| Return Type | Value |
|---|---|
| String | Resulting String |

The following function converts a Calendar object to a String object, using a format mask to format the String object.

### String calendarToString(Calendar,String)

| Parameter Type | Value |
|---|---|
| (Calendar,String) | Calendar to convert, format mask |

| Return Type | Value |
|---|---|
| String | Resulting String, in the format specified by the mask |

### Example:

A message item named DatePurchased is defined as a Calendar object. For another message, the user need the value of DatePurchased in a String object, in the format M/d/yyyy. The user would enter the function as follows:
calendarToString (MsgDef.DatePurchased, "M/d/yyyy")
If the value of DatePurchased were equivalent to February 13, 2000, the function would return a String object whose value is "2/13/2000".

### compareDates

This function compares two Calendar object date values and indicates whether the first date is less than, equal to, or greater than the second date.

### Long compareDates(Calendar,Calendar)

| Parameter Type | Value | |
|---|---|---|
| (Calendar,Calendar) | First date to compare, second date to compare | |

| Return Type | Value | When |
|---|---|---|
| Long | -1 | First date is less than second date |
| | 0 | First date is equal to second date |
| | 1 | First date is greater than second date |

### doubleToBigDecimal

This function converts a Double object to a BigDecimal object.

### BigDecimal doubleToBigDecimal(Double)

| Parameter Type | Value |
|---|---|
| (Double) | Double to convert |

| Return Type | Value |
|---|---|
| BigDecimal | Resulting BigDecimal |

### doubleToLong

This function converts a Double object to a Long object.

### Long doubleToLong(Double)

| Parameter Type | Value |
|---|---|
| (Double) | Double to convert |

| Return Type | Value |
|---|---|
| Long | Resulting Long |

### doubleToString

There are two versions of this function.

The following function converts a Double object to a String object.

### String doubleToString(Double)

| Parameter Type | Value |
|---|---|
| (Double) | Double to convert |

| Return Type | Value |
|---|---|
| String | Resulting String |

The following function converts a Double object to a String object, using a format mask to format the String object.

### String doubleToString(Double,String)

| Parameter Type | Value |
|---|---|
| (Double,String) | Double to convert, format mask |

| Return Type | Value |
|---|---|
| String | Resulting String, in the format specified by the mask |

### Example:

A message item named Discount is defined as a Double object. For another message, the user need the value of Discount in a String object, in the format #.##. The user would enter the function as follows:
doubleToString (MsgDef.Discount, "#.##")
If the value of Discount were 0.04531, the function would return a String object whose value is "0.05".

### findString

This function searches for a String object within another String object. If the function finds the specified String object, it returns the position of the String's first character within the other String.

### Long findString(String,String)

| Parameter Type | Value | |
|---|---|---|
| (String,String) | String to search, String to find | |

| Return Type | Value | When |
|---|---|---|
| Long | Position of the String's first character within the other String | String is found |
| | -1 | String is not found |

### findWord

This function searches for a word within a String object. If the function finds the specified word, it returns the position of the word's first character within the String. The function can only find the word when it is bounded by white space within the String.

### Long findWord(String,String)

| Parameter Type | Value | |
|---|---|---|
| (String,String) | String to search, word to find | |

| Return Type | Value | When |
|---|---|---|
| Long | Position of the Word's first character within the String | Word is found |
| | -1 | Word is not found |

### foundString

This function searches for a String object within another String object and returns a Boolean object.

### Boolean foundString(String,String)

| Parameter Type | Value | |
|---|---|---|
| (String,String) | String to search, String to find | |

| Return Type | Value | When |
|---|---|---|
| Boolean | True | String is found |
| | False | String is not found |

### found Word

This function searches for a word within a String object and returns a Boolean object. The function can only find the word if it is bounded by white space within the String.

### Boolean found Word(String,String)

| Parameter Type | Value | |
|---|---|---|
| (String,String) | String to search, word to find | |

| Return Type | Value | When |
|---|---|---|
| Boolean | True | Word is found |
| | False | Word is not found |

### getDate

This function finds the date in a Calendar object and returns the date as an Integer object.

### Integer getDate(Calendar)

| Parameter Type | Value |
|---|---|
| (Calendar) | Calendar to read |

| Return Type | Value |
|---|---|
| Integer | Resulting Integer, from 1 through 31 |

### Example:

A message item named DatePurchased is defined as a Calendar object. For another message, the user need the date from the value of DatePurchased in an Integer object. The user would enter the function as follows:
GetDate (MsgDef.DatePurchased)
If the value of DatePurchased were equivalent to February 13, 2000, the function would return an Integer object whose value is 13.

### getMonth

This function finds the month in a Calendar object and returns the month as an Integer object.

### Integer getMonth(Calendar)

| Parameter Type | Value |
|---|---|
| (Calendar) | Calendar to read |

| Return Type | Value |
|---|---|
| Integer | Resulting Integer, from 1 through 12 |

### Example:

A message item named DatePurchased is defined as a Calendar object. For another message, the user need the month from the value of DatePurchased in an Integer object. The user would enter the function as follows:
getMonth (MsgDef.DatePurchased)
If the value of DatePurchased were equivalent to February 13, 2000, the function would return an Integer object whose value is 2.

### getTokenAt

There are two versions of this function.

The following function parses a String object into tokens, finds a particular token, and returns the token as a String object. The function assumes that a comma delimits the tokens and lets the user indicate the position of the token to return.

If the String to parse contains a null value or the specified token position is out of range, the function returns a null value.

### String getTokenAt(String,Integer)

| Parameter Type | Value |
|---|---|
| (String,Integer) | String to parse, position of the token to find (starting with 0) |

| Return Type | Value |
|---|---|
| String | Indicated token, or a null value |

The following function parses a String object into token, finds a particular token, and returns the token as a String object. The function lets the user specify the character that delimits the tokens and lets the user indicate the position of the token to find.

If the String to parse contains a null value or the specified token position is out of range, the function returns a null value.

### String getTokenAt(String,String,Integer)

| Parameter Type | Value |
|---|---|
| (String,String.Integer) | String to parse, delimiter, position of the token to find (starting with 0) |

| Return Type | Value |
|---|---|
| String | Indicated token, or a null value |

### Examples:

(1) A message item named Date is defined as a String object that contains a date in the format M/d/yy. For another message, the user need the month from the value of Date in a String object. The user would enter the function as follows:
   getTokenAt (MsgDef.Date, "/", 0)
   If Date contained "2/13/00", the function would return a String object whose value is "2".
(2) A message item named Date is defined as a String object that contains a date in the format MM.dd.yy. For another message, the user need the date from the value of Date in a String object. The user would enter the function as follows:
   getTokenAt (MsgDef.Date, "/", 1)
   If Date contained "02.13.00", the function would return a String object whose value is "13".
(3) A message item named Date is defined as a String object that contains a date in the format M/d/yyyy. For another message, the user need the year from the value of Date in a String object. The user would enter the function as follows:
   getTokenAtMonth (MsgDef.Date, "/", 2)
   If Date contained "2/13/2000", the function would return a String object whose value is "2000".

### getYear

This function finds the year in a Calendar object and returns the year as an Integer object.

### Integer getYear(Calendar)

| Parameter Type | Value |
|---|---|
| (Calendar) | Calendar to read |

| Return Type | Value |
|---|---|
| Integer | Resulting Integer |

### Example:

A message item named DatePurchased is defined as a Calendar object. For another message, the user need the year from the value of DatePurchased in an Integer object. The user would enter the function as follows:
getYear (MsgDef.DatePurchased)
If the value of DatePurchased were equivalent to February 13, 2000, the function would return an Integer object whose value is 2000.

### integerToString

There are two versions of this function.

The following function converts an Integer object to a String object.

### String integerToString(Integer)

| Parameter Type | Value |
|---|---|
| (Integer) | Integer to convert |

| Return Type | Value |
|---|---|
| String | Resulting String |

The following function converts an Integer object to a String object, using a format mask to format the String object.

### String integerToString(Integer,String)

| Parameter Type | Value |
|---|---|
| (Integer,String) | Integer to convert, format mask |

| Return Type | Value |
|---|---|
| Sting | Resulting String, in the format specified by the mask |

### Example:

A message item named Quantity is defined as an Integer object. For another message, the user need the value of Quantity in a Sting object, in the format #,###. The user would enter the function as follows:
IntegerToString (MsgDef.Quantity, "#,###")
If the value of Quantity were 2540, the function would return a Sting object whose value is "2,540".

### isAlpha

This function determines whether all characters in a Sting object are alphabetic and returns a Boolean object.

### Boolean isAlpha(String)

| Parameter Type | Value | |
|---|---|---|
| (String) | String to check | |

| Return Type | Value | When |
|---|---|---|
| Boolean | True | All characters are alphabetic |
| | False | Not all character are alphabetic |

### isAlphaNumeric

This function determines whether all characters in a String object are alphanumeric and returns a Boolean object.

### Boolean isAlphaNumeric(String)

| Parameter Type | Value | |
|---|---|---|
| (String) | String to check | |

| Return Type | Value | When |
|---|---|---|
| Boolean | True | All characters are alphanumeric |
| | False | Not all character are alphanumeric |

### isNumeric

This function determines whether all characters in a String object are numeric and returns a Boolean object.

### Boolean isNumeric(String)

| Parameter Type | Value | |
|---|---|---|
| (String) | String to cheek | |

| Return Type | Value | When |
|---|---|---|
| Boolean | True | All characters are numeric |
| | False | Not all character are numeric |

### justifyCenter

There are two versions of this function.

The following function creates a String object of the length indicated by an Integer object and centers a String object within it. If the centered String is shorter than the specified length, the function pads the String on each side with an equal number of spaces.

If the centered String is longer than the specified length, the function returns a null value.

### String justifyCenter(String,Integer)

| Parameter Type | Value |
|---|---|
| (String,Integer) | String to center, length of the String to return |

| Return Type | Value |
|---|---|
| String | Resulting String, or a null value |

The following function creates a String object of the length indicated by an Integer object and centers a String object within it. If the centered String is shorter than the specified length, the function pads the String on each side with an equal number of characters specified in another String.

If the centered String is longer than the specified length, the function returns a null value.

### String justifyCenter(String,Integer,String)

| Parameter Type | Value |
|---|---|
| (String,Integer,String) | String to center, length of the String to return, and character to use to pad the String |

| Return Type | Value |
|---|---|
| String | Resulting String, or a null value |

### Example:

A message item named Name is defined as a String object. For another message, the user need the value of Name, centered in a String object of length 20, and padded if necessary with asterisks (*). The user would enter the function as follows:
JustifyCenter (MsgDef.Name, 20, "*")
If the value of Name were "Wolfgang A. Mozart", the function would return a String object whose value is "*Wolfgang A. Mozart*".

### justifyLeft

There are two versions of this function.

The following function creates a String object of the length indicated by an integer object and left justifies a String object within it. If the left-justified String is shorter than the specified length, the function pads the String with spaces on the right side.

If the left-justified String is longer than the specified length, the function returns a null value.

### String justifyLeft(String,Integer)

| Parameter Type | Value |
|---|---|
| (String,Integer) | String to left justify, length of the String to return |

| Return Type | Value |
|---|---|
| String | Resulting String, or a null value |

The following function creates a String object of the length indicated by an Integer object and left justifies a String object within it. If the left-justified String is shorter than the specified length, the function pads the String on the right side with characters specified in another String.

If the left-justified String is longer than the specified length, the function returns a null value.

### String justifyLeft(String,Integer,String)

| Parameter Type | Value |
|---|---|
| (String,Integer,String) | String to left justify, length of the String to return, and character to use to pad the String |

| Return Type | Value |
|---|---|
| String | Resulting String, or a null value |

### Example:

A message item named Name is defined as a String object. For another message, the user need the value of Name, left justified in a String object of length 20, and padded if necessary with spaces. The user would enter the function as follows:
JustifyLeft (MsgDef.Name, 20, "*")
If the value of Name were "Franz Shubert", the function would return a String object whose value is "Franz Shubert".

### justifyRight

There are two versions of this function.

The following function creates a String object of the length indicated by an Integer object and right justifies a String object within it. If the right-justified String is shorter than the specified length, the function pads the String with spaces on the left side.

If the right-justified String is longer than the specified length, the function returns a null value.

### String justifyRight(String,Integer)

| Parameter Type | Value |
|---|---|
| (String,Integer) | String to right justify, length of the String to return |

| Return Type | Value |
|---|---|
| String | Resulting String, or a null value |

The following function creates a String object of the length indicated by an Integer object and right justifies a String object within it. If the right-justified String is shorter than the specified length, the function pads the String on the left side with characters specified in another String.

If the right-justified String is longer than the specified length, the function returns a null value.

### String justifyRight(String,Integer,String)

| Parameter Type | Value |
|---|---|
| (String,Integer,String) | String to right justify, length of the String to return, and character to use to pad the String |

| Return Type | Value |
|---|---|
| String | Resulting String, or a null value |

### Example:

A message item named Name is defined as a String object. For another message, the user need the value of Name, right justified in a String object of length 20, and padded if necessary with asterisks (*). The user would enter the function as follows:
JustifyRight (MsgDef.Name, 20, "*")
If the value of Name were "Sergei Rachmaninoff, the function would return a String object whose value is "*Sergei Rachmaninoff".

### longToBigDecimal

This function converts a Long object to a BigDecimal object.

### BigDecimal longToBigDecimal(Long)

| Parameter Type | Value |
|---|---|
| (Long) | Long to convert |

| Return Type | Value |
|---|---|
| BigDecimal | Resulting BigDecimal |

### longToBoolean

This function converts a Long object to a Boolean object.

### Boolean longToBoolean(Long)

| Parameter Type | Value | |
|---|---|---|
| (Long) | Long to convert | |

| ReturnType | Value | When |
|---|---|---|
| Boolean | True | Long is any value other than 0 |
| | False | Long is 0 |

### longToDouble

This function converts a Long object to a Double object.

### Double longToDouble(Long)

| Parameter Type | Value |
|---|---|
| (Long) | Long to convert |

| Return Type | Value |
|---|---|
| Double | Resulting Double |

### longToString

There are two versions of this function.

The following function converts a Long object to a String object.

### String longToString(Long)

| Parameter Type | Value |
|---|---|
| (Long) | Long to convert |

| Return Type | Value |
|---|---|
| String | Resulting String |

The following function converts a Long object to a String object, using a format mask to format the String object.

### String longToString(Long,String)

| Parameter Type | Value |
|---|---|
| (Long,String) | Long to convert, format mask |

| Return Type | Value |
|---|---|
| String | Resulting String, in the format specified by the mask |

### Example:

A message item named CustID is defined as a Long object. For another message, the user need the value of CustID in a String object, in the format ##,###. The user would enter the function as follows:
longToString (MsgDef.CustID, "##,###")
If the value of CustID were 10321, the function would return a String object whose value is "10,321".

### lookup

There are two versions of this function.

The following function looks up a String object in a lookup table specified in another String object and returns the corresponding value. If the function does not find a corresponding value in the lookup table, it returns a null value.

### String lookup(String,String)

| Parameter Type | Value |
|---|---|
| (String,String) | String to look up, lookup table |

| Return Type | Value |
|---|---|
| String | Value found in the lookup table, or a null value |

The following function looks up a String object in a lookup table specified in another String object and returns the corresponding value. If the function does not find a corresponding value in the lookup table, it returns a default value specified in a third String object.

### String lookup(String,String,String)

| Parameter Type | Value |
|---|---|
| (String,String,String) | String to look up, lookup table, default value |

| Return Type | Value |
|---|---|
| String | Value found in the lookup table, or the default value |

### Example:

A message item named State is defined as a String object. State always contains a two-letter abbreviation for the name of one of three states in the United States. For another message, the user need the full name of the state in a String object. If no full name corresponds to the abbreviation, the user want the String object to contain "N/A". The user would enter the function as follows:
lookup (MsgDef.State, "MD=Maryland, PA=Pennsylvania, VA=Virginia", "N/A")
If the value of State were "VA", the function would return a String object whose value is "Virginia".

### lowercase

This function converts all characters in a String object to lowercase.

### String lowercase(String)

| Parameter Type | Value |
|---|---|
| (String) | String to convert |

| Return Type | Value |
|---|---|
| String | Resulting String |

### replaceString

This function searches a String object for a particular String object, replaces the found String object with a replacement String object, and returns the String object with the replacement String in place.

If the function cannot find the String to replace, it returns the String it searched without changing it.

### String replaceString(String,String,String)

| | |
|---|---|
| Parameter Type | Value |
| (String,String,String) | String to replace, replacement String, String to search |
| Return Type | Value |
| String | String with replacement String in place |

### Example:

A message item named Address is defined as a String object. For addresses in the state of Virginia, the value in Address sometimes includes the two-letter abbreviation VA. For another message, the user need a String object that contains the value of Address, but with the full name of the state substituted for the abbreviation. The user would enter the function as follows:
replaceString ("VA", "Virginia, MsgDef.Address)
If the value of Address were "Reston, VA 20191", the function would return a String object whose value is "Reston, Virginia 20191".

### replaceWord

This function searches a String object for a particular word, replaces the found word with another word, and returns the String object with the replacement word in place.

The function can only find the specified word within the String object if the word is: (1) preceded and followed by white space; (2) left justified within the String object and and followed by white space; and (3) right justified within the String object and preceded by white space. If the function cannot find the word, it returns the String it searched without changing it.

### String replaceWord(String,String,String)

| Parameter Type | Value |
|---|---|
| (String,String,String) | Word to replace, replacement word, String to search |

| Return Type | Value |
|---|---|
| String | String with replacement word in place |

### Example:

A message item named Address is defined as a String object. For addresses in the state of Maryland, the value in Address sometimes includes the two-letter abbreviation MD. For another message, the user need a String object that contains the value of Address, but with the full name of the state substituted for the abbreviation. The user would enter the function as follows:
replaceWord ("MD", "Maryland", MsgDef.Address)
If the value of Address were "Bethesda, MD 20904", the function would return a String object whose value is "Bethesda, Maryland 20904".

### sizeOf

There are two versions of this function.

The following function determines the size of a String object and returns the size as a Long object.

### Long sizeOf(String)

| Parameter Type | Value |
|---|---|
| (String) | String whose size to determine |

| Return Type | Value |
|---|---|
| Long | Size of the String |

The following function determines the size of a ByteArray object and returns the size as a Long object.

### Long sizeOf(ByteArray)

| Parameter Type | Value |
|---|---|
| (ByteArray) | ByteArray whose size to determine |

| Return Type | Value |
|---|---|
| Long | Size of the ByteArray |

### stringToBigDecimal

This function converts a String object to a Big Decimal object.

### BigDecimal stringToBigDecimalString)

| Parameter Type | Value |
|---|---|
| (String) | String to convert |

| Return Type | Value |
|---|---|
| BigDecimal | Resulting BigDecimal |

### stringToBoolean

This function converts a String object to a Boolean object.

### Boolean stringToBoolean(String)

| Parameter Type | Value |
|---|---|
| (String) | String to convert |

| Return Type | Value |
|---|---|
| Boolean | Resulting Boolean |

### stringToCalendar

There are two versions of this function.

The following function converts a String object to a Calendar object.

### stringToCalendar(String)

| Parameter Type | Value |
|---|---|
| (String) | String to convert |

| Return Type | Value |
|---|---|
| Calendar | Resulting Calendar |

The following function converts a String object to a Calendar object, using a format mask to interpret the String object.

### Calendar stringToCalendar(String,String)

| Parameter Type | Value |
|---|---|
| (String,String) | String to convert, format mask |

| Return Type | Value |
|---|---|
| Calendar | Resulting Calendar |

### Example:

A message item named DatePurchased is defined as a String object that contains a date in the format M/d/yy. For another message, the user need the Calendar equivalent of the value of DatePurchased in a Calendar object. The user would enter the function as follows:
stringToCalendar (MsgDef.DatePurchased, "M/d/yy")
If the value of DatePurchased were "2/13/00", the function would return a Calendar object whose value is the equivalent of February 13, 2000.

### stringToDouble

There are two versions of this function.

The following function converts a String object to a Double object.

### Double stringToDouble(String)

| Parameter Type | Value |
|---|---|
| (String) | String to convert |

| Return Type | Value |
|---|---|
| Double | Resulting Double |

The following function converts a String object to a Double object, using a format mask to interpret the String object.

### Double stringToDouble(String,String)

| Parameter Type | Value |
|---|---|
| (String,String) | String to convert, format mask |

| Return Type | Value |
|---|---|
| Double | Resulting Double |

### Example:

A message item named TotalCost is defined as a String object that contains a dollar amount in the format ##,###.##. For another message, the user need the value of TotalCost in a Double object. The user would enter the function as follows:
stringToDouble (MsgDef.Totalcost, "##,###.##")
If the value of TotalCost were "5,137.29", the function would return a Double object whose value is 5137.29.

### stringToInteger

There are two versions of this function.

The following function converts a String object to an Integer object.

### Integer stringToInteger(String)

| Parameter Type | Value |
|---|---|
| (String) | String to convert |

| Return Type | Value |
|---|---|
| Integer | Resulting Integer |

The following function converts a String object to an Integer object, using a format mask to interpret the String object.

### Integer stringToInteger(String,String)

| Parameter Type | Value |
|---|---|
| (String,String) | String to convert, format mask |

| Return Type | Value |
|---|---|
| Integer | Resulting Integer |

### Example:

A message item named Quantity is defined as a String object that contains an amount in the format #,###. For another message, the user need the value of Quantity in a String object. The user would enter the function as follows:
stringToInteger (MsgDef.Quantity, "#,###")
If the value of Quantity were "2,540", the function would return an Integer object whose value is 2540.

### stringToLong

There are two versions of this function.

The following function converts a String object to a Long object.

### Long stringToLong(String)

| Parameter Type | Value |
|---|---|
| (String) | String to convert |

| Return Type | Value |
|---|---|
| Long | Resulting Long |

The following function converts a String object to a Long object, using a format mask to interpret the String object.

### Long stringToLong(String,String)

| Parameter Type | Value |
|---|---|
| (String,String) | String to convert, format mask |

| Return Type | Value |
|---|---|
| Long | Resulting Long |

### Example:

A message item named CustID is defined as a String object that contains a number in the format ##,###. For another message, the user need the value of CustID in a Long object. The user would enter the function as follows:
stringToLong (MsgDef.CustID, "##,###")
If the value of CustID were "10,321", the function would return a Long object whose value is 10321.

### subarray

This function finds a ByteArray object within another ByteArray object and returns the found ByteArray object.

If the function cannot find the ByteArray, it returns a null value.

### ByteArray subarray(Long,Long,ByteArray)

| Parameter Type | Value |
|---|---|
| (Long,Long,ByteArray) | Position of the first byte of the ByteArray to find, position of the last byte of the ByteArray to find, ByteArray that contains the ByteArray to find; positions start with 0 |

| Return Type | Value |
|---|---|
| ByteArray | ByteArray that has been found |

Example A message item named Array is defined as a ByteArray object. For another message, the user need the first eight bytes of Array in a ByteArray object. The user would enter the function as follows:
subArray (0, 7, MsgDef.Array)

### substring

This function finds a String object within another String object and returns the found String object.

If the function cannot find the String, it returns a null value.

### String substring(Long,Long,String)

| Parameter Type | Value |
|---|---|
| (Long,Long,String) | Position of the first character of the String to find, position of the last character of the String to find, String that contains the String to find |

| Return Type | Value |
|---|---|
| String | String that has been found |

### trim

This function removes white space before and after a String object.

### String trim(String)

| Parameter Type | Value |
|---|---|
| (String) | String object from which to remove white space |

| Return Type | Value |
|---|---|
| String | Resulting String |

### uppercase

This function converts all characters in a String object to uppercase.

### String uppercase(String)

| Parameter Type | Value |
|---|---|
| (String) | String to convert |

| Return Type | Value |
|---|---|
| String | Resulting String |

The examples shown and described herein above are not meant to limit the scope of the invention. Accordingly, modifications and variations according to the present invention will become apparent to those of ordinary skill in the art, without departing from the spirit and scope of the appended claims.

## Claims

1. A system for integrating a plurality of computer applications, comprising:
an enterprise messaging system, said enterprise messaging system passing messages between said computer applications;
a database storage system coupled to said enterprise messaging system, said database storage system storing a plurality of data transformation configurations and a plurality of rules;
an integration service coupled to said enterprise messaging system, said integration server comprising a data transformation engine using the data transformation configurations stored in said database storage system and a rules evaluation engine using the rules stored in said database storage system;
a plurality of agent-adapters coupled to said enterprise messaging system, each agent-adapter coupled to a respective one of said computer applications, each agent-adapter passing messages between said enterprise messaging system and said respective computer application; and
a message schema operating in conjunction with said agent-adapters to parse individual message elements from the computer applications.

2. The system according to claim 1, wherein said integration service system splits and combines messages received from said enterprise messaging system and performs content-based routing of messages to said computer applications.

3. The system according to claim 1, wherein each said agent-adapter translates messages being passed from said enterprise messaging system to said respective computer application from a system format to a respective computer application format, and translates messages being passed from said respective computer application to said enterprise messaging system from the respective computer application format to the system format.

4. The system according to claim 1, wherein each said agent-adapter further passes messages between other said agent-adapters and said respective computer application.

5. The system according to claim 1, wherein each said agent-adapter comprises an adapter portion and an agent portion encapsulating said adapter portion.

6. The system according to claim 1, wherein each said agent-adapter comprises one or more adapter portions and an agent portion encapsulating all of said one or more adapter portions.

7. An improved enterprise application integration system including an agent-adapter for use therein, the improvement comprising:
an adapter configured for a selected one of the enterprise applications;
an agent service hosting said adapter;
a message definition for each of a plurality of messages said adapter will produce, receive, or reply to;
means for connecting said adapter to said selected enterprise application; and
means for implementing said adapter through said connecting means.

8. The improvement according to claim 7, wherein said adapter is selected from the group consisting of a source adapter, a target adapter, a reply adapter, and a request adapter.

9. A method for passing messages between a first computer application and a second computer application, comprising the steps of:
providing a first message having a first data from said first computer application;
publishing said first message to obtain a first published message;
converting said first data of said first published message to a second data to obtain a second message;
publishing said second message to obtain a second published message; and
providing said second published message to said second computer application.

10. The method according to claim 9, further comprising the steps of:
translating said first message from a first computer application format to a system format prior to publishing said first message; and
translating said second published message from said system format to a second computer application format prior to providing said second published message to said second computer application.

11. The method according to 9, wherein said step of converting said first data comprises:
requesting said second data from a database; and
receiving said second data from said database.

12. An agent-adapter for use in an enterprise application integration system, which integrates a plurality of enterprise applications, comprising:
an adapter configured for a selected one of the enterprise applications;
an agent service hosting said adapter;
a message definition for each of a plurality of messages said adapter will produce, receive, or reply to;
means for connecting said adapter to said selected enterprise application; and
means for implementing said adapter through said connecting means.

13. The agent-adapter according to claim 12, wherein said adapter is selected from the group consisting of a source adapter, a target adapter, a reply adapter, and a request adapter.

14. The agent-adapter according to claim 13, wherein said adapter comprises a source adapter and further comprising means for designating selected ones of a plurality of targets said source adapter is adapted to send one or more messages.

15. The agent-adapter according to claim 13, wherein said adapter comprises a target adapter and further comprising means for designating selected ones of a plurality of sources from which said target adapter is adapted to receive one or more messages.

16. The agent-adapter according to claim 13, wherein said adapter comprises a reply adapter and further comprising means for designating selected ones of a plurality of requesters to which said reply adapter is adapted to send one or more reply messages.

17. A method for passing messages between a first computer application and a second computer application, comprising the steps of:
providing a first message having a first data from said first computer application;
publishing said first message to obtain a first published message;
converting said first data of said first published message to a second data to obtain a second message;
publishing said second message to obtain a second published message; and
providing said second published message to said second computer application.

18. The method according to claim 17, further comprising the steps of:
translating said first message from a first computer application format to a system format prior to publishing said first message; and
translating said second published message from said system format to a second computer application format prior to providing said second published message to said second computer application.

19. The method according to 18, wherein said step of converting said first data comprises:
requesting said second data from a database; and
receiving said second data from said database.

20. The method according to claim 19, further comprising the steps of:
providing an adapter configured for a selected one of said computer applications;
providing an agent service to host said adapter;
defining a message definition for each of a plurality of messages said adapter will produce, receive, or reply to; and
connecting said adapter to selected computer application.

21. In an enterprise application integration system that integrates a plurality of enterprise applications, each of which have a respective native format for creating, sending, receiving, storing, and processing a plurality of messages, the improvement comprising:
an agent-adapter including a plurality of adapters encapsulated by an agent;
wherein each of said plurality of adapters encapsulated by said agent includes means for performing a discrete function while encapsulated by said agent.

22. The improvement according to claim 21, wherein said agent further comprises a plurality of objects embedded therein, each of said plurality of objects adapted to perform a discrete function.

23. The improvement according to claim 22, wherein a first of said plurality of objects embedded in said agent further comprises means for managing connections of said agent-adapter between selected ones of the plurality of enterprise applications and the system.

24. The improvement according to claim 23, wherein a second of said plurality of objects embedded in said agent further comprises means for managing errors detected in said agent-adapter between selected ones of the plurality of enterprise applications and the system.

25. The improvement according to claim 23, wherein a third of said plurality of objects embedded in said agent further comprises means for managing a transformation of the plurality of messages within said agent-adapter between selected ones of the plurality of enterprise applications and the system.

26. The improvement according to claim 22, further comprising a plurality of nodes and a plurality of system services resident on said nodes.

27. The improvement according to claim 26, wherein said agent further comprises a plurality of objects embedded therein, each of said plurality of objects adapted to perform a discrete function.

28. The improvement according to claim 27, wherein each of said plurality of objects embedded in said agent is adapted to perform its respective function at any one of said plurality of nodes.

29. The improvement according to claim 27, wherein each of said plurality of objects embedded in said agent is adapted to perform its respective function in conjunction with respective ones of said objects embedded in another agent in the system.

30. A system for integrating a plurality of computer applications, comprising:
an enterprise messaging system, said enterprise messaging system passing messages between said computer applications;
a database storage system coupled to said enterprise messaging system, said database storage system storing a plurality of data transformation configurations and a plurality of rules;
an integration service coupled to said enterprise messaging system, said integration server comprising a data transformation engine using the data transformation configurations stored in said database storage system and a rules evaluation engine using the rules stored in said database storage system; and
a plurality of agent-adapters coupled to said enterprise messaging system, each agent-adapter coupled to a respective one of said computer applications, each agent-adapter passing messages between said enterprise messaging system and said respective computer application.

31. The system according to claim 30, further comprising:
a message schema, including a plurality of message elements;
a plurality of accessors, each of which is adapted for a selected one of said computer applications; and
a plurality of converters, each of which is adapted for a selected one of said computer applications and adapted to be coupled to selected ones of said plurality of accessors;
wherein selected ones of said plurality of message elements corresponding to one of said computer applications are adapted to be accessed and converted for communication with another of said computer applications.

32. The system according to claim 31, wherein said plurality of accessors and said plurality of converters are distributed throughout the system.
